# EUROPEAN PATENT APPLICATION

(11) **EP 4 712 687 A1**
(43) Date of publication of application: **18.03.2026**
(21) Application number: 23936834.3
(22) Date of filing: 12.05.2023
(51) Int. Cl.: H04W 88/04

(54) **COMMUNICATION METHOD, REPEATER, AND NETWORK DEVICE**

(71) Applicant: FUJITSU LIMITED, Kawasaki-shi, Kanagawa 211-8588 (JP)
(72) Inventor: JIANG, Qinyan, Beijing 100022 (CN); ZHANG, Lei, Beijing 100022 (CN); WANG, Xin, Beijing 100022 (CN)
(74) Representative: Haseltine Lake Kempner LLP
(86) International application number: PCT/CN2023/093849
(87) International publication number: WO 2024/234137

(57) **Abstract**

Embodiments of the present disclosure provide a communication method, a repeater and a network device, the communication method including: a repeater receives a first MAC CE for indicating an uplink backhaul link beam; and transmission of the repeater on a backhaul link uses a spatial filter to which a TCI state or an SRI provided by the first MAC CE corresponds.

## Description

### FIELD

The present disclosure relates to the technical field of communications.

### BACKGROUND

Compared with traditional 3G (third generation mobile communication technology) and 4G (fourth generation mobile communication technology) systems, a 5G (fifth generation mobile communication technology) system can provide a greater bandwidth and a higher data rate, and can support more types of terminals and vertical services.

To this end, in addition to traditional telecommunication spectrums, the 5G system is also deployed on a new spectrum, a frequency of the new spectrum is significantly higher than frequencies of the traditional telecommunication spectrums used by 3G and 4G systems. For example, the 5G system may be deployed at a millimeter wave band (28GHz, 38GHz, 60GHz and above, etc.).

According to the propagation principles of wireless signals, the higher a frequency of a carrier it relies on, the more serious the fading it experiences during propagation. Therefore, in actual deployment, compared to previous 3G, 4G systems, the 5G system requires more robust cell coverage enhancement methods, in particular a 5G system deployed in a millimeter wave band. How to better enhance 5G system cell coverage has become an urgent problem to be solved.

In order to better solve the coverage problem of a cellular mobile communication system in actual deployment, an RF repeater (RF relay/repeater) is adopted to amplify and forward a communication signal between a terminal equipment (UE) and a network device, and which is a more commonly used deployment means. An RF repeater is widely applied in the actual deployment of 3G and 4G systems. Generally speaking, the RF repeater is a device that amplifies and forwards incoming and outgoing signals between devices in an RF domain. That is to say, the RF repeater is a non-regenerative relay node that just amplifies and forwards all received signals directly.

However, traditional RF repeaters cannot perform information interaction with other devices (such as a network device/terminal equipment, etc.). Specifically, in terms of reception, traditional RF repeaters do not support measurement/demodulation/decoding of signals to be forwarded, and do not receive signals other than the signals to be forwarded. In terms of transmission, traditional RF repeaters only amplify and forward a signal, and do not support generation of a signal and transmission of a signal generated by themselves. Therefore, a forwarding behavior of traditional RF repeaters is not controlled by a network (such as via a network device, etc.).

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

To enhance NR coverage, 3GPP Rel-18 proposes a network-controlled repeater (NCR) scheme to forward a signal between a network device and a terminal equipment. The NCR may communicate directly with the network device via a control link, so that a network may control a forwarding operation of the NCR to a certain extent.

The inventor finds that for the NCR (network-controlled repeater), according to current discussions, Rel-18 will introduce two new MAC CEs (Media Access Control Control Elements) for indicating backhaul link beams, i.e., an NCR Downlink Backhaul Link Beam Indication MAC CE and an NCR Uplink Backhaul Link Beam Indication MAC CE. However, regarding how to specifically indicate a backhaul link beam and how the NCR uses the indicated backhaul link beam to perform forwarding, currently there are still some problems to be solved. For example, in the case of a non-unified TCI state, that is, in a case where a repeater does not support a unified TCI state or is not configured with the unified TCI state, how to indicate and/or determine an uplink backhaul link beam.

For at least one of the above problems, the embodiments of the present disclosure provide a communication method, a repeater and a network device.

According to an aspect of the embodiments of the present disclosure, a repeater is provided, comprising:
a mobile terminal configured to receive a first MAC CE for indicating an uplink backhaul link beam; and
a forwarding unit with transmission on a backhaul link using a spatial filter to which a TCI state or an SRI provided by the first MAC CE corresponds.

According to another aspect of the embodiments of the present disclosure, a repeater is provided, comprising:
a mobile terminal configured to receive a first MAC CE and/or a second MAC CE for indicating an uplink backhaul link beam; and
a forwarding unit with transmission on a backhaul link using a spatial filter to which a TCI state or an SRI provided by the first MAC CE and/or the second MAC CE corresponds.

One of advantageous effects of the embodiments of the present disclosure lies in: by receiving a first MAC CE and/or a second MAC CE for indicating an uplink backhaul link beam, transmission of a repeater on a backhaul link may use a spatial filter to which a TCI state or an SRI provided by the first MAC CE and/or the second MAC CE corresponds, thereby the spatial filter used for transmission on the backhaul link is clarified, and network performance is improved.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of a conceptual model of a communication system in the embodiments of the present disclosure;
FIG. 2 is a schematic diagram of a communication method in the embodiments of a first aspect of the present disclosure;
FIG. 3 to FIG. 8 are schematic diagrams of a first MAC CE in the embodiments of the present application;
FIG. 9 is a schematic diagram of a communication method in the embodiments of a second aspect of the present disclosure;
FIG. 10 is a schematic diagram of a communication method in the embodiments of a third aspect of the present disclosure;
FIG. 11 is another schematic diagram of a communication method in the embodiments of a third aspect of the present disclosure;
FIG. 12 is a schematic diagram of a repeater in the embodiments of the present disclosure;
FIG. 13 is another schematic diagram of a repeater in the embodiments of the present disclosure;
FIG. 14 is a schematic diagram of a network device in the embodiments of the present disclosure;
FIG. 15 is a composition schematic diagram of a network device in the embodiments of the present disclosure;
FIG. 16 is a composition schematic diagram of a repeater in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femto, pico, etc.). And the term "base station" may include some or all functions of a base station, each base station may provide communication coverage to a specific geographic region. The term "cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

In the embodiments of the present disclosure, transmission of existing or further implementable services may be carried out between the network device and the terminal equipment. For example, these services may include but be not limited to: enhanced Mobile Broadband (eMBB), massive Machine Type Communication (mMTC), Ultra-Reliable Low-Latency Communication (URLLC), Internet of Vehicles (V2X) communication and so on.

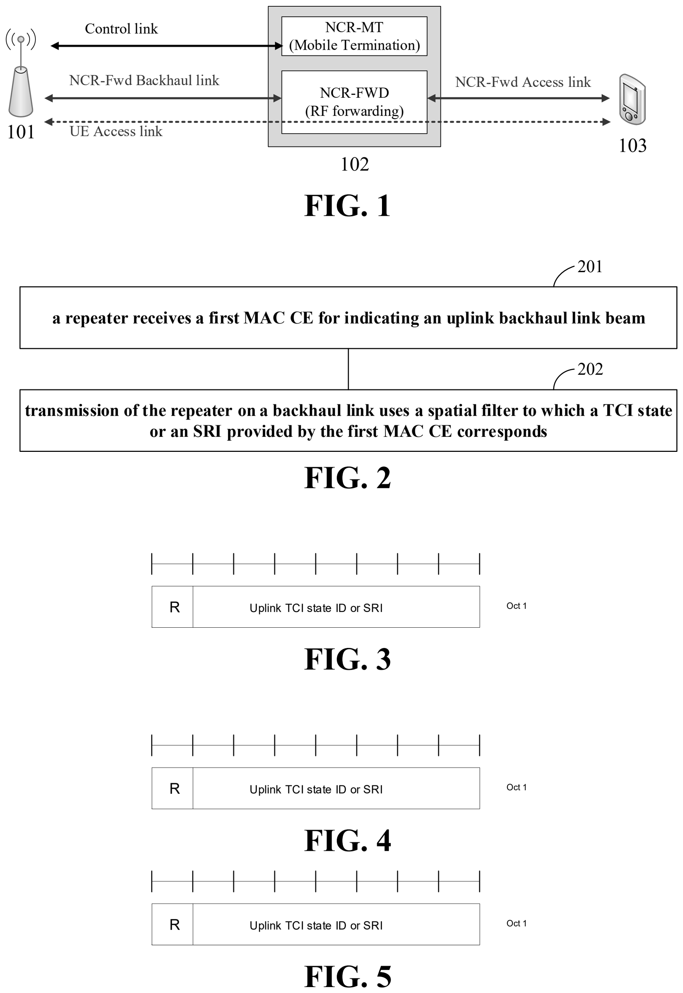

FIG. 1 is a schematic diagram of a conceptual model of NCR in the embodiments of the present disclosure. As shown in FIG. 1, NCR 102 is configured between the network device 101 and the terminal equipment 103. NCR 102 may include two modules/components: a mobile terminal of a repeater (NCR-MT) and a forwarding unit of the repeater (NCR-Fwd); the NCR-Fwd is also called a routing unit of an NCR (NCR-RU). The NCR-MT is used for communication (information interaction) with the network device 101, and the NCR-Fwd is used for forwarding signals traveling between the network device 101 and the terminal equipment 103. The NCR-MT and the NCR-Fwd are functional entities, their functions may be implemented by the same or different hardware modules.

As shown in FIG. 1, the NCR 102 in the embodiments of the present disclosure may have three links: a control link (C-link), a return (or backhaul) link (BH link) for forwarding, and an access link (AC link, also called an NCR-UE link). The C-link is used for communication between the NCR 102 and the network device 101. The BH link is used for the NCR 102 to receive a to-be-forwarded signal from the network device 101, or, forward a signal from the terminal equipment 103 to the network device 101. The AC link is used for the NCR 102 to forward a signal from the network device 101 to the terminal equipment 103, or, to receive a to-be-forwarded signal from the terminal equipment 103. Specifically, the NCR-MT communicates with the network device 101 via the C-link; the NCR-Fwd forwards signals via the BH link and the AC link. In addition, as shown in FIG. 1, there may further be an access link between the network device 101 and the terminal equipment 103, which is called an UE access link, the UE access link may pass through the NCR 102 or not.

In the embodiments of the present disclosure, a repeater may communicate with a network device, the repeater may receive a communication channel/signal transmitted by the network device, and demodulate/decode the channel/signal, thereby obtaining information transmitted by the network device to the repeater, the signal processing process is hereinafter referred to as "communication". The repeater may further forward a channel/signal transmitted between the network device and the terminal equipment, the repeater does not demodulate/decode the channel/signal, may perform amplification and other processing, the signal processing process is hereinafter referred to as "forwarding". "Communication" and "forwarding" are collectively referred to as "transmission". In addition, "perform transmission or reception on an AC (or BH) link" may be equivalent to "perform forwarding on an AC (or BH) link", and "perform transmission or reception on a control link" may be equivalent to "perform communication on a control link". The above terms are only for the sake of description, and do not constitute restrictions on the present disclosure. In some situations, "a forwarding unit" may be interchanged with "a forwarding behavior".

In the embodiments of the present disclosure, the repeater may further be expressed as a network-controlled repeater (NCR), a transponder, a radio frequency repeater, a relay, a radio frequency relay; or may also be expressed as a transponder node, a repeater node, a relay node, an intelligent transponder, an intelligent repeater, an intelligent relay, an intelligent transponder node, an intelligent repeater node, an intelligent relay node, etc., the present disclosure is not limited to thereto.

In the embodiments of the present disclosure, the network device may be a device of a serving cell of a terminal equipment, or a device of a cell where a repeater is located, or a device of a serving cell of a repeater, or a parent node of a repeater. The present disclosure does not limit the name of the repeater, as long as the device with said functions can be achieved, all are included in the scope of the repeater of the present disclosure.

In the embodiments of the present disclosure, "multiple" refers to at least two, or two or more.

In the embodiments of the present disclosure, "predefine" refers to that is stipulated in a protocol or determined according to rules stipulated in the protocol, without being additionally configured.

Various implementations of the embodiments of the present disclosure will be described below with reference to the drawings. These implementations are exemplary only and are not limitations to the present disclosure.

### Embodiments of a first aspect

Embodiments of the present disclosure provide a communication method, which is described from a repeater side.

FIG. 2 is a schematic diagram of a communication method in the embodiments of the present disclosure. As shown in FIG. 2, the method includes:
201, a repeater receives a first MAC CE for indicating an uplink backhaul link beam; and
202, transmission of the repeater on a backhaul link uses a spatial filter to which a TCI state or an SRI provided by the first MAC CE corresponds.

It should be noted that the above FIG. 2 only schematically describes the embodiments of the present disclosure, but the present disclosure is not limited thereto. For example, an execution step of each operation may be adjusted appropriately, moreover other some operations may be increased or operations therein may be reduced. Persons skilled in the art may make appropriate modifications according to the above contents, not limited to the records in the above FIG. 2.

According to the embodiments of the present disclosure, after receiving a first MAC CE for indicating an uplink backhaul link beam, transmission of a repeater on a backhaul link uses a spatial filter to which a TCI state or an SRI provided (or indicated) by the first MAC CE corresponds, thereby the spatial filter used for transmission on the backhaul link is clarified, and network performance is improved.

In the above embodiments, the first MAC CE is e.g. the aforementioned NCR Uplink Backhaul Beam Indication MAC CE, but the present disclosure is not limited thereto, and may further be other MAC CE name(s).

In the above embodiments, the TCI state e.g. is a joint TCI state, or a UL TCI state.

In some embodiments, the SRI is used to provide a first reference resource and/or a first reference reference signal for determining/obtaining a spatial relation for uplink of a backhaul link. Uplink transmission of the backhaul link may use a spatial filter to which the first reference resource and/or the first reference reference signal provided by the SRI correspond(s). That is, the spatial filter corresponding to the SRI is a spatial filter to which the first reference resource or the first reference reference signal indicated by/corresponding to the SRI corresponds. The spatial filter to which the first reference resource and/or the first reference reference signal correspond(s) e.g. refers to a spatial filter for receiving the first reference resource and/or the first reference reference signal (for example when the first reference resource and/or the first reference signal is/are a downlink resource or a downlink reference signal (such as an SSB, an NZP CSI-RS resource)), or refers to a spatial filter for transmitting the first reference resource and/or the first reference reference signal (for example when the first reference resource and/or the first reference reference signal is an uplink resource or an uplink reference signal (such as an SRS resource, a PUCCH resource)).

In the above embodiments, the SRI e.g. is: an SRS resource, and/or an SRS resource indicator, and/or an SRS resource ID, and/or an SRS resource set, and/or an SRS resource set indicator, and/or an SRS resource set ID, and/or a PUCCH resource, and/or a PUCCH resource indicator, and/or a PUCCH resource ID, and/or a PUCCH resource set, and/or a PUCCH resource set indicator, and/or a PUCCH resource set ID, and/or a PUCCH resource group, and/or a PUCCH resource group indicator, and/or a PUCCH resource group ID, and/or spatial relation information, and/or a spatial relation information indicator and/or a spatial relation information ID. That is, the SRI in operation 202 may be replaced by any one or more of the above expressions, but the present disclosure is not limited thereto, the SRI may further refer to other similar concepts.

In the above embodiments, the spatial relation information may indicate the first reference resource and/or the first reference reference signal (reference RS), and/or, the spatial relation information may include: an SSB index, and/or a NZP CSI-RS resource index, and/or an SRS resource ID, etc., the present disclosure is not limited thereto.

In the above embodiments, the first reference resource and/or the first reference reference signal, for example, may include a PUCCH resource, and/or an SSB, and/or a NZP CSI-RS resource, and/or an SRS resource, etc., the present disclosure is not limited thereto.

In some embodiments, in a case where the repeater does not perform transmission simultaneously on the backhaul link and a control link, the transmission of the repeater on the backhaul link uses the spatial filter to which the TCI state or the SRI provided by the first MAC CE corresponds. In some embodiments, in a case where the repeater performs transmission simultaneously on the backhaul link and a control link, the spatial filter for the transmission on the backhaul link is the same as that for the control link. That is to say, after receiving the first MAC CE, when the repeater separately performs transmission only on the backhaul link, the backhaul link uses the spatial filter to which the TCI state or the SRI provided by the first MAC CE corresponds, while when the repeater performs transmission simultaneously on the backhaul link and the control link, the repeater uses the same spatial filter as the control link, the spatial filter used by the control link may be the same as or different from the spatial filter to which the TCI state or the SRI provided by the first MAC CE corresponds. Thereby, it is further clarified that a spatial filter used for transmission on the backhaul link in different situations after the first MAC CE is received may be different, which may be related to whether to perform transmission simultaneously on the control link.

In some embodiments, an information field included in the first MAC CE is fixed. For example, the first MCA CE only includes a first information field. The present disclosure is not limited thereto, the information field included in the first MAC CE may further be variable. For example, in a case where the repeater is configured with a unified TCI state, or is configured with a unified TCT state type (*unifiedTCI-StateType*), the first MAC CE includes a first information field; and in a case where the repeater is not configured with a unified TCI state, or is not configured with a unified TCI state type (*unifiedTCI-StateType*), it may also be said that in a case where the repeater does not support a unified TCI state (i.e., a non-unified TCI state), the first MAC CE includes a first information field and a second information field.

In the above embodiments, the first information field is used to indicate an uplink beam for backhaul link transmission. For example, the first information field is "Uplink TCI state ID or SRI" or "TCI state ID or SRI" or "unified TCI state ID or SRI", etc., the present disclosure is not limited thereto.

In the above embodiments, contents related to the second information field are described in detail in the following text.

In some embodiments, the first MAC CE has a fixed size. For example, the first MAC CE only includes one octet, one octet including 8 bits. The present disclosure is not limited thereto, the first MAC CE may further have a variable size. For example, in the case of a unified TCI state, or in the case of being configured with a unified TCI state type (*unifiedTCI-StateType*), the first MAC CE only includes one octet; and in the case of a non-unified TCI state, or in the case of not being configured with a unified TCI state type (*unifiedTCI-StateType*), the first MAC CE includes two octets.

FIG. 3 is a schematic diagram of an example of a first MAC CE. In the example shown in FIG. 3, the first MAC CE includes a first information field and a reserved bit. As shown in FIG. 3, the first MAC CE has a fixed size and consists of one octet, where "R" is a reserved bit, "Uplink TCI state ID or SRI" is a first information field.

The example in FIG. 3 is only for illustration, the present disclosure is not limited thereto. The first MAC CE may further include a first information field and/or a second information field and/or other information field (e.g., called a third information field) and/or a reserved bit, etc.

In some embodiments, in a case where the repeater is configured with a "joint" unified TCI state type (i.e., *unifiedTCI-StateType* = joint) and/or is configured with a joint TCI state, i.e., for the joint unified TCI state type, the first MAC CE includes an ID of a joint TCI state.

In the above embodiments, if the repeater (such as NCR or NCR-MT) is configured with *unifiedTCI-StateType* whose value is "joint", the first MAC CE (such as the first information field) includes an ID of a joint TCI state (such as *TCI state ID* or *TCI-StateId*)*.*

In the above example, that the repeater is configured with *unifiedTCI-StateType* whose value is "joint" may be that a first serving cell (such as a Pcell) of the repeater (such as NCR or NCR-MT) is configured with *unifiedTCI-StateType* whose value is "joint". The present disclosure is not limited thereto.

In the above embodiments, the joint TCI state may be a (joint) TCI state of an active DL BWP, or may be a (joint) TCI state configured by a certain configuration message (called a first configuration message) in the active DL BWP. The first configuration information is used to configure a joint TCI state, for example including but not limited to: *dl-OrJoint-TCI-State-ToAddModList* and/or *dl-OrJoint-TCI-State-ToReleaseList.*

In the above example, the active DL BWP e.g. is an active DL BWP of a control link or NCR-MT, for another example is an active DL BWP of a primary cell (Pcell) of the control link or NCR-MT, for a further example is an active DL BWP of a primary cell (Pcell), etc.

FIG. 4 is a schematic diagram of a structure of a first MAC CE according to the above embodiments. As shown in FIG. 4, the first MAC CE includes a first information field "Uplink TCI state ID or SRI" and a reserved bit "R", a corresponding protocol may be described as follows:

| |
|---|
| - Uplink TCI state ID or SRI: If the *dl-OrJoint-TCIStateList* is configured as specified in TS 38.331 [5] *and unifiedTCI- StateType* is configured with a value *joint,* this field contains *TCI-StateId* (comprising all 7 bits) of a Joint TCI State (configured **by *dl-OrJoint-TCI-State-ToAddModList* )(and *dl-OrJoint-TCI-State-ToReleaseList*) (in the *pdsch-Config* or *PDSCH-Config)* (in the *bwp-Dedicated* or *BWP-DownlinkDedicated)* in the active DL BWP (of Pcell**) **(of C-link)**, which is used as the uplink beam indication for backhaul link transmission. |
| - R: Reserved bit, set to 0. |

Or;

| |
|---|
| - Uplink TCI state ID or SRI: If *unifiedTCI-StateType* is configured with a value *joint,* this field contains *TCI-StateId* (comprising all 7 bits) of a Joint TCI State (configured **by *dl-OrJoint-TCI-State-ToAddModList* )(and *dl-OrJoint-TCI-State-ToReleaseList*) (in the *pdsch-Config* or** ***PDSCH-**Config)* **(in the *bwp-Dedicated* or *BWP-DownlinkDedicated)* in the active DL BWP (of Pcell) (of C-link),** which is used as the uplink beam indication for backhaul link transmission. |
| - R: Reserved bit, set to 0. |

In some embodiments, in a case where the repeater is configured with a "separate" unified TCI state type (i.e., *unifiedTCI-StateType* = separate) and/or is configured with an uplink TCI state (i.e., is configured with *ul-TCl-StateList*), i.e., for the separate unified TCI state type, the first MAC CE includes an UL TCI state ID.

In the above embodiments, for example, if the repeater (such as NCR/NCR-MT) is configured with *unifiedTCI-StateType* whose value is "separate" and/or is configured with *ul-TCI-StateList,* the first MAC CE (such as the first information field) includes an UL TCI state ID (such as TCI state ID or TCI-UL-State-Id).

In the above example, that the repeater is configured with *unifiedTCI-StateType* whose value is "separate" may be that a first serving cell (such as a Pcell) of the repeater is configured with *unifiedTCI-StateType* whose value is "separate" and/or is configured with *ul-TCI-StateList.* The present disclosure is not limited thereto.

In the above embodiments, the UL TCI state may be a (UL) TCI state of an active UL BWP, or may be a (UL) TCI state configured by certain configuration information (called second configuration information) in the active UL BWP. The second configuration information is used to configure a UL TCI state, such as *ul-TCI-StateList,* but is not limited thereto.

In the above example, the active UL BWP e.g. is an active UL BWP of a control link or NCR-MT, for another example is an active UL BWP of a primary cell (Pcell) of the control link or NCR-MT, for a further example is an active UL BWP of a primary cell (Pcell), etc.

FIG. 5 is a schematic diagram of a structure of a first MAC CE according to the above embodiments. As shown in FIG. 5, the first MAC CE includes a first information field "Uplink TCI state ID or SRI" and a reserved bit "R", a corresponding protocol may be described as follows:

| |
|---|
| - Uplink TCI state ID or SRI: If the *ul-TCI-StateList* is configured as specified in TS 38.331 [5], this field contains *TCI-UL-State-Id* (contained in the 6 rightmost bits) of an UL TCI State **(configured by *ul-TCI-StateList*) (in the *bwp-Dedicated* or *BWP-UplinkDedicated*) in (or 'of') the active UL BWP (of Pcell) (of C-link),** which is used as the uplink beam indication for backhaul link transmission, with the 1 remaining bit set to zero. |
| - R: Reserved bit, set to 0. |

In some embodiments, in a case where the repeater (such as NCR or NCR-MT) does not support a unified TCI state and/or is not configured with a unified TCI state (i.e., is not configured with *unifiedTCI-StateType*), i.e., for a non-unified TCI state, the SRI is provided by the first MAC CE.

In the above embodiments, *unifiedTCI-StateType* is used to indicate the same TCI state type configured for a serving cell, it is included in a serving cell configuration (*ServingCellConfig*), when its value is "separate", the serving cell is configured with first configuration information (e.g. *dl-OrJointTCI-StateList*) (for configuring one or more DL TCI states) and second configuration information (e.g. *ul-TCI-ToAddModList*) (for configuring one or more UL TCI states), and when its value is "joint", the serving cell is configured with the first configuration information (e.g. *dl-OrJointTCI-StateList*) (for configuring one or more joint TCI states for uplink and downlink).

Currently, for the non-unified TCI state (that is, the repeater (such as NCR or NCR-MT) does not support a unified TCI state and/or is not configured with a unified TCI state), according to current discussions, an NCR Uplink Backhaul Beam Indication MAC CE will provide an SRI, however, it is unclear what this SRI specifically refers to, and therefore it is not clear that how this SRI provides the first reference resource or the first reference reference signal, thus it is not clear either that how this MAC CE uses the SRI as an uplink beam indication for a backhaul link, thus it is impossible to truly support a backhaul link beam indication in this situation.

For said problem, the embodiments of the present disclosure further provide several methods to support an uplink beam indication of a backhaul link in the case of the non-unified TCI state. Descriptions are provided respectively as follows.

In one method, that the first MAC CE provides an SRI comprises that, the first MAC CE indicates an SRS resource and/or an SRS resource set. Thereby, transmission on a backhaul link uses a spatial filter to which an SRS resource and/or an SRS resource set provided by the first MAC CE corresponds.

In the above method, a second reference resource and/or second reference reference signal to which one SRS resource corresponds is/are indicated by RRC signaling and/or MAC signaling.

The RRC signaling, for example, includes: an SRS configuration (*SRS-Config*), a second reference resource and/or second reference reference signal to which one SRS resource corresponds is/are provided/indicated by a spatial relation information (*spatialRelationInfo*) corresponding to the SRS resource. The MAC signaling, for example, includes: an Enhanced SP/AP SRS Spatial Relation Indication MAC CE or an SP Positioning SRS Activation/Deactivation MAC CE. The second reference resource and/or second reference reference signal to which one SRS resource corresponds is/are indicated by one or more information fields corresponding to the SRS resource (in the MAC signaling).

The second reference resource and/or second reference reference signal to which one SRS resource corresponds is/are used to determine a spatial relation for the SRS resource. Specifically, the spatial filter used for transmitting the SRS resource or used when an SRS is transmitted using the SRS resource is the same as a spatial filter for transmitting or receiving the second reference resource and/or the second reference reference signal. That is, the spatial filter to which the SRS resource corresponds is the same as a spatial filter to which the second reference resource and/or the second reference reference signal corresponds. Further, the spatial filter to which the SRS resource provided by the first MAC CE corresponds, is a spatial filter to which the second reference resource and/or the second reference reference signal of the SRS resource corresponds.

In the above embodiments, the second reference resource and/or the second reference reference signal (reference RS) comprises an SSB, and/or an NZP CSI-RS resource, and/or an SRS resource. The SRS resource e.g. is used for beam management, but is not limited thereto. For example, the repeater (NCR-MT) receives an SRS configuration (SRS-Config) via RRC signaling, and determines an SRS resource and/or an SRS resource set according to the SRS configuration.

In the above example, the SRS may be configured in units of UL BWP (that is, per UL BWP), i.e., different UL BWPs respectively include an SRS configuration.

In the above example, the SRS configuration may include a configuration of an SRS resource set and a configuration of an SRS resource list.

For example, one or two SRS resource sets used as codebook may be configured, among which one SRS resource set used as codebook includes at most two or four SRS resources, and so on.

For another example, an SRS resource set used as non-codebook may be configured, among which one SRS resource set used as non-codebook includes at most four SRS resources, and so on.

A method for indicating an SRS resource via a first MAC CE and a method for indicating an SRS resource set via a first MAC CE are described below.

As for an SRS resource is indicated via a first MAC CE:
In some embodiments, the SRS resource indicated by the first MAC CE is periodic or semi-persistent or aperiodic, for example the SRS resource indicated by the first MAC CE must be periodic or semi-persistent or aperiodic, or the SRS resource indicated by the first MAC CE may be periodic or semi-persistent or aperiodic. That is, correspondingly, a value of *resourceType* (a higher-layer parameter) associated with the first MAC CE is aperiodic or semi-persistent or periodic. The *resourceType* e.g. is located in SRS-Resource and/or in SRS-ResourceSet.

In some embodiments, the SRS resource indicated by the first MAC CE (must):
have a specific resource type; and/or,
have a specific purpose; and/or,
have specific spatial relation information; and/or
belong to a specific SRS resource set; and/or,
have an SRS resource identifier less than or not greater than a first value; and/or,
belong to former N or latter N SRS resources arranged in an ascending or descending order of indices; and/or,
belong to former N or latter N SRS resources arranged in an ascending or descending order of SRS resource identifiers.

Specific meaning of the implementation content will be described later.

In the above embodiments, the SRS resource indicated by the first MAC CE must be periodic. That is to say, only a periodic SRS resource (or, only an SRS resource with a value of associated *resourceType* (a higher-layer parameter) being periodic) can be used as a reference for determining a spatial filter used by an uplink backhaul link, or can be used to obtain a spatial relation for the uplink backhaul link.

In some embodiments, the SRS resource indicated by the first MAC CE is used for beam management or codebook or non-codebook or antenna switching or PDC (propagation delay calculation). For example, the SRS resource indicated by the first MAC CE must be used for beam management or codebook or non-codebook or antenna switching or PDC, or the SRS resource indicated by the first MAC CE may be used for beam management or codebook or non-codebook or antenna switching or PDC. That is to say, correspondingly, a value of *usage* (a higher-layer parameter) associated with the first MAC CE is beamManagement or codebook or nonCodebook or antennaSwitching, or, a value of *usagePDC* (a higher-layer parameter) associated with the first MAC CE is "true".

In the above embodiments, the SRS resource indicated by the first MAC CE must be used for beam management. That is to say, only an SRS resource for beam management (or, only an SRS resource with a value of associated *usage* (a higher-layer parameter) being beamManagement) can be used as a reference for determining a spatial filter used by an uplink backhaul link, or can be used to obtain a spatial relation for the uplink backhaul link.

In some embodiments, the SRS resource indicated by the first MAC CE is configured by configuration information (for example, provided by RRC signaling), for example configured by third configuration information and/or fourth configuration information. Relevant contents about the third configuration information and the fourth configuration information will be described later.

In some embodiments, the SRS resource indicated by the first MAC CE is in an active uplink BWP (UL BWP). For example, it is in an active UL BWP of a first serving cell (such as a PCell) of the repeater (NCR or NCR-MT) or C-link, the present disclosure is not limited thereto.

In some embodiments, the first MAC CE indicates the SRS resource from one or more SRS resources.

In the above embodiments, the one or more SRS resources are configured by the third configuration information and/or by the fourth configuration information. For example, the first MAC CE indicates one SRS resource from SRS resources configured by the third configuration information and/or the fourth configuration information in an active UL BWP.

In some examples, the one or more SRS resources are all or part of SRS resources in an SRS resource list. The SRS resource list, for example, is configured by the third configuration information. That is to say, the first MAC CE indicates the SRS resource corresponding to a spatial filter that should be used for transmission of a backhaul link, from all or part of the SRS resources configured by the third configuration information.

In the above example, the third configuration information e.g. is *srs-ResourceToAddModList* and/or *srs-ResourceToReleaseList,* and/or, *srs-PosResourceToAddModList-r16* and/or *srs-PosResourceToReleaseList-r16,* the present disclosure is not limited thereto.

In the above example, the first MAC CE indicates the SRS resource from all SRS resources configured by the third configuration information, for example including: the first MAC CE indicates any SRS resource configured by the third configuration information. For example, it is assumed that there are a total of M bits for indicating SRS resources in the first information field and/or other information fields of the first MAC CE, an SRS resource may only be indicated from at most 2*^{M}* SRS resources, the number of SRS resources in an SRS resource list configured by the third configuration information should not be more than 2*^{M}*. Thereby, the first MAC CE may indicate any SRS resource configured by the third configuration information.

For example, the first MAC CE indicates an SRS resource configured by *srs-ResourceToAddModList,* the *srs-ResourceToAddModList* configures at most 64 SRS resources and an SRS resource identifier of each configured SRS resource, 6 bits (such as rightmost 6 bits) of the first information field of the first MAC CE are used to indicate one SRS resource, for example, provide the SRS resource identifier of the one SRS resource.

In the above example, that the first MAC CE indicates the SRS resource from part of the SRS resources configured by the third configuration information, for example includes that: the first MAC CE indicates the SRS resource from some SRS resources that meet a specific condition in the SRS resources configured by the third configuration information (depending on a specific configuration, it is possible that all configured SRS resources meet this specific condition).

For example, in the above example, the one or more SRS resources:
have a specific resource type (for example is/are configured with a specific resource type); and/or,
have a specific purpose (for example belong(s) to an SRS resource set configured with a specific purpose); and/or,
have specific spatial relation information; and/or,
belong to a specific SRS resource set; and/or,
have an SRS resource identifier less than or not greater than a threshold (called a first value); and/or,
belong to former N or latter N SRS resources arranged in an ascending or descending order of indices (or indices from small to large/from large to small); and/or,
belong to former N or latter N SRS resources arranged in an ascending or descending order of SRS resource identifiers (or identifiers from small to large/from large to small).

In the above examples, the specific resource type e.g. comprises: periodic or semi-persistent or aperiodic, etc., the present disclosure is not limited thereto; the specific purpose e.g. comprises: beam management or codebook or non-codebook or antenna switching or PDC, etc., the present disclosure is not limited thereto; and the specific spatial relation information e.g. comprises: that a corresponding second reference resource and/or second reference reference signal is/are in an active downlink BWP (DL BWP) or uplink BWP (UL BWP), etc., the present disclosure is not limited thereto.

In the above example, the SRS resource identifier is less than or not greater than a first value. For example, it is assumed that there are M bits for indicating an SRS resource ID of one SRS resource in the first information field and/or other information fields of the first MAC CE, the maximum ID that can be indicated is 2^{M}-1, that is to say, the first MAC CE indicates one SRS resource from one or more SRS resources whose SRS resource ID is not greater than 2^{M}-1. For example, if the rightmost 4 bits in the first information field of the first MAC CE are used to provide SRS resource IDs, one SRS resource is indicated from one or more SRS resources with an SRS resource ID not greater than 15.

In the above example, the specific SRS resource set may be predefined, or may be indicated, the present disclosure does not impose any restrictions on a specific indication method. For example, the specific SRS resource set can be determined according to a predefined rule (there is no need to introduce corresponding new indication information), there is no need to be indicated by new information.

In the above example, the specific SRS resource set may:
have a specific resource type; and/or,
have a specific purpose; and/or,
have a specific SRS resource set identifier; and/or,
have a specific index; and/or,
be indicated by the first MAC CE.

In the above example, the specific purpose e.g. comprises: beam management or codebook or non-codebook or antenna switching or PDC. For example, a value of *usage* (a higher-layer parameter) associated with the SRS resource set is *beamManagement* or *codebook* or *nonCodebook* or *antennaSwitching,* or, a value of *usagePDC* (a higher-layer parameter) associated with the SRS resource set is *true.* The present disclosure is not limited thereto.

In the above example, the specific resource type e.g. comprises: periodic, or semi-persistent, or aperiodic. For example, a value of *resourceType* (a higher-layer parameter) (such as *SRS-ResourceSet*) associated with the SRS resource set is *aperiodic* or *semi-persistent* or *periodic.* The present disclosure is not limited thereto.

In the above example, the specific SRS resource set identifier (*srs-ResourceSetId*) e.g. comprises: maximum or minimum SRS resource set identifier (*srs-ResourceSetId*), or relatively large or small SRS resource set identifier (*srs-ResourceSetId*), or SRS resource set identifier (*srs-ResourceSetId*) equal to a specific value (such as 0). The present disclosure is not limited thereto.

In the above example, the specific index e.g. comprises: a first or last one in an SRS resource set configured by fourth configuration information. The present disclosure is not limited thereto.

For example, the specific SRS resource set comprises:
an SRS resource set with the smallest SRS resource set identifier (srs-ResourceSetId) configured by the fourth configuration information in an active UL BWP of a first serving cell (such as a Pcell) of a repeater (such as NCR/NCR-MT), and/or,
an SRS resource set for codebook configured by the fourth configuration information in the active UL BWP of the first serving cell (such as the Pcell) of the repeater (such as NCR/NCR-MT) (when txConfig = codebook, and the SRS resource set configured by the fourth configuration information only comprises one SRS resource set for codebook), and/or,
an SRS resource set for non-codebook configured by the fourth configuration information in the active UL BWP of the first serving cell (such as the Pcell) of the repeater (such as NCR/NCR-MT) (when txConfig = non codebook, and the SRS resource set configured by the fourth configuration information only comprises one SRS resource set for non-codebook), and/or,
an SRS resource set with the smallest (or largest) SRS resource set identifier (srs-ResourceSetId) in SRS resource sets for codebook configured by the fourth configuration information in the active UL BWP of the first serving cell (such as the Pcell) of the repeater (such as NCR/NCR-MT) (when txConfig = codebook, and the SRS resource set configured by the fourth configuration information comprises one or more SRS resource sets for codebook), and/or,
an SRS resource set with the smallest (or largest) SRS resource set identifier (srs-ResourceSetId) in SRS resource sets for non-codebook configured by the fourth configuration information in the active UL BWP of the first serving cell (such as the Pcell) of the repeater (such as NCR/NCR-MT) (when txConfig = non codebook, and the SRS resource set configured by the fourth configuration information comprises one or more SRS resource sets for non-codebook), and/or,
an SRS resource set with a smaller (or larger) SRS resource set identifier (srs-ResourceSetId) in SRS resource sets for codebook (configured by first RRC signaling) configured by the fourth configuration information in the active UL BWP of the first serving cell (such as the Pcell) of the repeater (such as NCR/NCR-MT) (when txConfig = codebook, and the SRS resource set configured by the first RRC signaling comprises two SRS resource sets for codebook), and/or,
an SRS resource set with a smaller (or larger) SRS resource set identifier (srs-ResourceSetId) in SRS resource sets for non-codebook configured by the fourth configuration information in the active UL BWP of the first serving cell (such as the Pcell) of the repeater (such as NCR/NCR-MT) (when txConfig = non codebook, and the SRS resource set configured by the fourth configuration information comprises two SRS resource sets for non-codebook), and/or,
an SRS resource set for beam management, configured by the fourth configuration information in the active UL BWP of the first serving cell (such as the Pcell) of the repeater (such as NCR/NCR-MT), and/or,
an SRS resource set for antenna switching, configured by the fourth configuration information in the active UL BWP of the first serving cell (such as the Pcell) of the repeater (such as NCR/NCR-MT), and/or,
a periodic SRS resource set, configured by the fourth configuration information in the active UL BWP of the first serving cell (such as the Pcell) of the repeater (such as NCR/NCR-MT).

The above are only examples for description, the present disclosure is not limited thereto.

For example, the one or more SRS resources are: former *N* SRS resources in an ascending order of SRS resource identifiers, in the the SRS resources (such as SRS resources whose higher-layer parameter *"usage"* is set to "beamManagement") for beam management (for example belonging to an SRS resource set for beam management) in an SRS resource list. For another example, the one or more SRS resources are: former *N* SRS resources in an ascending order of SRS resource identifiers, in periodic SRS resources in the SRS resource list. For another example, the one or more SRS resources are: former N SRS resources in an ascending order of SRS resource identifiers, in the SRS resource list.

In the above examples, it is assumed that there are a total of *M* bits in the first MAC CE (or in the first information field and/or other information fields) for indicating SRS resources, *N* ≤ 2*^{M},* however the present disclosure is not limited thereto.

In the above examples, the first MAC CE or the first information field or other information fields therein may further comprise an SRS resource identifier (*SRS-ResourceId*), the resource identifier here may be an SRS resource identifier of an SRS resource configured by the third configuration information in an active UL BWP of the first serving cell (such as the Pcell) of the repeater (such as NCR/NCR-MT), however the present disclosure is not limited thereto.

For example, the first information field of the first MAC CE includes 7 bits, the M bits (such as the rightmost 6 or 4 bits) therein include an SRS resource identifier, and the remaining (7 - *M*) bits (such as the corresponding 1 or 3 bits) are set to 0.

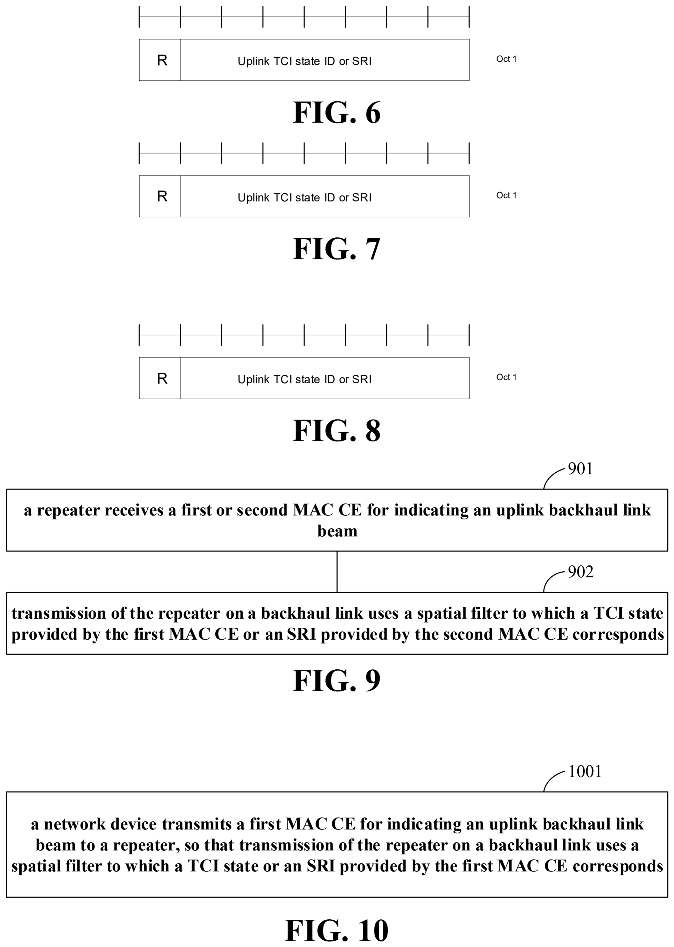

FIG. 6 is a schematic diagram of a structure of a first MAC CE according to the above embodiments. As shown in FIG. 6, the first MAC CE includes a first information field "Uplink TCI state ID or SRI" and a reserved bit "R", a corresponding protocol may be described as follows:

| |
|---|
| - Uplink TCI state ID or SRI: If (the *dl-OrJoint-TCIStateList* is configured as specified in TS 38.331 [5] |
| *and*) *unifiedTCI-StateType* is configured with a value *joint,* this field contains *TCI-StateId* (comprising all 7 bits) of a Joint TCI State (configured by ***dl-OrJoint-TCI-State-ToAddModList* )(and *dl-OrJoint-TCI-State-ToReleaseList*) (in the *pdsch-Config* or *PDSCH-Config)* (in the *bwp-Dedicated* or *BWP-DownlinkDedicated)* in (or 'of') the active DL BWP (of Pcell) (of C-link),** which is used as the uplink beam indication for backhaul link transmission. If the *ul-TCI-StateList* is configured as specified in TS 38.331 [5], this field contains *TCI-UL-State-Id* (contained in the 6 rightmost bits) of an UL TCI State **(configured by *ul-TCI-StateList*) (in the *bwp-Dedicated* or *BWP-UplinkDedicated)* in (or 'of') the active UL BWP (of Pcell) (of C-link),** which is used as the uplink beam indication for backhaul link transmission, with the 1 remaining bit set to zero. **Otherwise, this field contains an *SRS-ResourceId* (contained in the 6 rightmost bits) (of an SRS resource)(configured by *srs-ResourceToAddModList*) (in the *srs-Config* or *SRS-Config*) (in the *bwp-Dedicated* or *BWP-UplinkDedicated)* in (or 'of') the active UL BWP (of Pcell) (of C-link), which is used as the uplink beam indication for backhaul link transmission, with the 1 remaining bits set to zero;** |
| - R: Reserved bit, set to 0. |

In some other examples, the one or more SRS resources are all or part of SRS resources in one or more SRS resource sets. The SRS resource set(s), for example, is/are configured by the fourth configuration information. That is to say, the first MAC CE indicate the SRS resource corresponding to a spatial filter that should be used for transmission of a backhaul link, from all or part of the SRS resources in one or more SRS resource sets configured by the fourth configuration information.

In the above example, the fourth configuration information e.g. is configuration information in the active UL BWP of the first serving cell (such as the Pcell) of the repeater (such as NCR/NCR-MT), but is not limited thereto.

In the above example, the fourth configuration information may configure one or more SRS resource sets. For example, the fourth configuration information may configure at most 16 SRS resource sets, the present disclosure is not limited thereto.

The fourth configuration information e.g. is *srs-ResourceSetToAddModList* and *srs-ResourceSetToReleaseList* in *srs-Config*/*SRS-config* in *BWP-UplinkDedicated,* for another example, is *srs-ResourceSetToAddModListDCI-0-2* and *srs-ResourceSetToReleaseListDCI-0-2-r16,* for a further example, is *srs-PosResourceSetToAddModList-r16* and *srs-PosResourceSetToReleaseList,* etc., the present disclosure is not limited thereto.

Each SRS resource set may be separately configured with a resource type, a purpose, etc. The resource type e.g. comprises: periodic, or semi-persistent, or aperiodic, and the purpose e.g. comprises: beam management or codebook or non-codebook or antenna switching or PDC. SRS resources included in different SRS resource sets have or do not have an intersection, that is to say, different SRS resource sets include or do not include the same SRS resources.

In the above example, the first MAC CE e.g. indicates the SRS resource from one or more SRS resource sets that meet specific conditions (specific SRS resource sets) in one or more SRS resource sets configured by the fourth configuration information.

In the aforementioned examples, the specific SRS resource set has already been described, its contents are incorporated here and are not repeated here.

As for an SRS resource set is indicated via a first MAC CE:
In some embodiments, an SRS resource set indicated by the first MAC CE is periodic or semi-persistent or aperiodic, for example the SRS resource set indicated by the first MAC CE must be periodic or semi-persistent or aperiodic, or the SRS resource set indicated by the first MAC CE may be periodic or semi-persistent or aperiodic. That is, correspondingly, a value of *resourceType* (a higher-layer parameter) (for example in *SRS-ResourceSet*) associated with the first MAC CE is *aperiodic* or *semi-persistent* or *periodic.*

In some embodiments, the SRS resource set indicated by the first MAC CE (must):
have a specific resource type; and/or,
have a specific purpose; and/or,
have a specific spatial relation configuration; and/or,
only comprise one SRS resource; and/or,
have an SRS resource set identifier less than or not greater than a second value; and/or,
belong to former N or latter N SRS resource sets arranged in an ascending or descending order of indices; and/or,
belong to former N or latter N SRS resource sets arranged in an ascending or descending order of SRS resource set identifiers.

Specific meaning of the above content will be described later.

In some embodiments, the SRS resource set indicated by the first MAC CE is used for beam management or codebook or non-codebook or antenna switching or PDC. For example, the SRS resource set indicated by the first MAC CE must be used for beam management or codebook or non-codebook or antenna switching or PDC, or the SRS resource set indicated by the first MAC CE may be used for beam management or codebook or non-codebook or antenna switching or PDC. That is to say, correspondingly, a value of *usage* (a higher-layer parameter) associated with the first MAC CE is *beamManagement* or *codebook* or *nonCodebook* or *antennaSwitching,* or, a value of *usagePDC* (a higher-layer parameter) associated with the first MAC CE is "true".

In some embodiments, the SRS resource set indicated by the first MAC CE is configured by configuration information, for example configured by the fourth configuration information.

In some embodiments, the SRS resource set indicated by the first MAC CE is in an active uplink BWP (UL BWP). For example, it is in an active UL BWP of a first serving cell (such as a PCell) of the repeater, the present disclosure is not limited thereto.

In some embodiments, the first MAC CE indicates the SRS resource set from one or more SRS resource sets. Here, the one or more SRS resource sets may be configured by the fourth configuration information. For example, the first MAC CE includes first information, the first information indicating an SRS resource set from one or more SRS resource sets configured by the fourth configuration information. In other embodiments, the first information may further not be included in the first MAC CE but is carried by RRC signaling or other MAC CE or physical layer signaling.

In the above embodiments, in a case where the first information is included in the first MAC CE, the first information e.g. is a first information field and/or other information field of the first MAC CE, the present disclosure is not limited thereto.

In some examples, the first MAC CE indicates the SRS resource set from all or part of the SRS resource sets configured by the fourth configuration information.

In the above example, that the first MAC CE indicates the SRS resource set from all SRS resource sets configured by the fourth configuration information, for example includes that: the first MAC CE may indicate any SRS resource set configured by the fourth configuration information. For example, it is assumed that there are a total of M bits for indicating SRS resource sets in the first MAC CE (or a first information field and/or other information fields therein), an SRS resource set may only be indicated from at most 2*^{M}* SRS resource sets, the number of SRS resource sets configured by the fourth configuration information should not be more than 2*^{M}.* Thereby, the first MAC CE may indicate any SRS resource set configured by the fourth configuration information.

In the above example, that the first MAC CE indicates the SRS resource set from part of the SRS resource sets configured by the fourth configuration information, for example includes that: the first MAC CE indicates the SRS resource set from part of the SRS resource sets that meet a specific condition in SRS resource sets configured by the fourth configuration information (depending on a specific configuration, it is possible that all configured SRS resource sets meet this specific condition).

For example, in the above example, the one or more SRS resource sets:
have a specific resource type (for example is/are configured with a specific resource type); and/or,
have a specific purpose; and/or,
have specific spatial relation configuration; and/or,
only comprise one SRS resource; and/or,
have an SRS resource set identifier less than or not greater than a threshold (called a second value); and/or,
belong to former N or latter N SRS resource sets arranged in an ascending or descending order of indices (or indices from small to large/from large to small); and/or,
belong to former N or latter N SRS resource sets arranged in an ascending or descending order of SRS resource set identifiers (or identifiers from small to large/from large to small).

In the above examples, the specific purpose e.g. comprises: beam management or codebook or non-codebook or antenna switching or PDC, that is to say, correspondingly, a value of *usage* (a higher-layer parameter) associated with the SRS resource set is *beamManagement* or *codebook* or *nonCodebook* or *antennaSwitching,* or, a value of *usagePDC* (a higher-layer parameter) associated with the SRS resource set is true.

In the above examples, the specific resource type e.g. comprises: periodic or semi-persistent or aperiodic, that is to say, correspondingly, a value of *resourceType* (a higher-layer parameter) (for example in *SRS-ResourceSet*) associated with the SRS resource set is *aperiodic* or *semi-persistent* or *periodic.*

In the above examples, the specific spatial relation configuration e.g. comprises that spatial relation information and/or second reference resources and/or second reference reference signals of all SRS resources (such as all SRS resources in one SRS resource set) is/are identical, for example corresponding reference signals for a spatial relation are identical.

For example, the one or more SRS resource sets comprise former N SRS resource sets in an ascending order of SRS resource set identifiers, in the SRS resource sets (such as SRS resource sets whose higher-layer parameter *"usage"* is set to "beamManagement") for beam management configured by the fourth configuration information. For another example, the one or more SRS resource sets comprise former N SRS resource sets in an ascending order of SRS resource set identifiers, in the periodic SRS resource sets configured by the fourth configuration information. For another example, the one or more SRS resource sets comprise former N SRS resource sets in an ascending order of SRS resource set identifiers, in the SRS resource sets configured by the fourth configuration information.

In the above examples, it is assumed that there are a total of M bits for indicating SRS resource sets in the first MAC CE (or the first information field and/or other information fields therein), *N* ≤ 2*^{M},* however the present disclosure is not limited thereto.

In some embodiments, the same information field of the first MAC CE is used to indicate the SRS resource set and the SRS resource.

For example, the first MAC CE only includes information for indicating the SRS resource set (does not includes information for indicating SRS resources). For example, the first MAC CE includes information indicating one SRS resource set, and transmission of a backhaul link uses a spatial filter corresponding to the one SRS resource set or SRS resources in the one SRS resource set. The one SRS resource set only includes one SRS resource, or the one SRS resource set includes multiple SRS resources, but a spatial relation configuration of all SRS resource therein is the same, for example, corresponding reference signals for a spatial relation are the same. Or, transmission of the backhaul link uses a spatial filter corresponding to specific SRS resources in the one SRS resource set, such as a spatial filter corresponding to the SRS resources with the smallest SRS resource identifier. In other words, the specific SRS resources in the one SRS resource set (such as SRS resources with the smallest SRS resource identifier) are SRS resources indicated by the first MAC CE, or the first MAC CE indirectly indicates one SRS resource by indicating one SRS resource set.

In some embodiments, different information fields of the first MAC CE are respectively used to indicate the SRS resource set and the SRS resource.

For example, the first MAC CE includes information for indicating the SRS resource set and information for indicating the SRS resource. The following text describes a positional relation of information bits for indicating SRS resource set and SRS resource in the first MAC CE.

For example, a first information field of the first MAC CE is used to indicate the SRS resource set and the SRS resource. That is to say, the SRS resource set and the SRS resource are indicated by the same/identical information field. For example, the first part of bits of the first information field is used to indicate the SRS resource set (from one or more SRS resource sets), and the second part of bits is used to indicate the SRS resource (from an SRS resource set indicated by the first part of bits). The first part of bits is before or after the second part of bits.

For another example, the second information field of the first MAC CE is used to indicate the SRS resource set from one or more SRS resource sets, and the first information field is used to indicate the SRS resource from the SRS resource set indicated by the second information field. That is to say, the SRS resource set and the SRS resource are indicated by different information fields. The first information field is before or after the second information field.

In some embodiments, the first MAC CE indicates the SRS resource by indicating an SRS resource identifier. For example, the first information field of the first MAC CE includes an SRS resource identifier (or SRS-ResourceId) of one SRS resource, and the first MAC CE indicates the SRS resource by indicating this identifier, the present disclosure is not limited thereto.

In some embodiments, the first MAC CE indicates the SRS resource based on a mapping relationship between a bit value and the SRS resource in one or more SRS resources (such as an index of the resource).

In the above embodiments, the bit value of the first MAC CE and the SRS resource indicated by it may have a mapping relationship shown in the examples in Tables 1 to 10, but the present disclosure is not limited thereto. "bit field mapped to index" is a bit value (which has been converted to decimalism); "SRI(s)" is SRS resource identifier(s) or SRS resource index(es), where the index refers to the position of which SRS resource in a set, and "N_{SRS}" is the number of SRS resources.

**Table 1:**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

**Table 2:**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6-7 | reserved | 6 | 0,3 |
| | | | | 7 | 1,2 |
| | | | | 8 | 1,3 |
| | | | | 9 | 2,3 |
| | | | | 10-15 | reserved |

**Table 3:**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 0 | 0,1 | 2 | 2 | 2 | 2 |
| 1 | 2 layers: reserved | 3 | 1 layer: reserved | 3 | 3 |
| | | 0 | 0,1 | 4-7 | 1 layer: reserved |
| | | 1 | 0,2 | 0 | 0,1 |
| | | 2 | 1,2 | 1 | 0,2 |
| | | 3 | 2 layers: reserved | 2 | 0,3 |
| | | | | 3 | 1,2 |
| | | | | 4 | 1,3 |
| | | | | 5 | 2,3 |
| | | | | 6-7 | 2 layers: reserved |

**Table 4:**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

**Table 5:**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 0 | 0,1 | 2 | 2 | 2 | 2 |
| 1 | 2 layers: reserved | 3 | 1 layer: reserved | 3 | 3 |
| | | 0 | 0,1 | 4-7 | 1 layer: reserved |
| | | 1 | 0,2 | 0 | 0,1 |
| | | 2 | 1,2 | 1 | 0,2 |
| | | 3 | 2 layers: reserved | 2 | 0,3 |
| | | 0 | 0,1,2 | 3 | 1,2 |
| | | 1-3 | 3 layers: reserved | 4 | 1,3 |
| | | | | 5 | 2,3 |
| | | | | 6-7 | 2 layers: reserved |
| | | | | 0 | 0,1,2 |
| | | | | 1 | 0,1,3 |
| | | | | 2 | 0,2,3 |
| | | | | 3 | 1,2,3 |
| | | | | 4-7 | 3 layers: reserved |

**Table 6:**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

**Table 7:**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 0 | 0,1 | 2 | 2 | 2 | 2 |
| 1 | 2 layers: reserved | 3 | 1 layer: reserved | 3 | 3 |
| | | 0 | 0,1 | 4-7 | 1 layer: reserved |
| | | 1 | 0,2 | 0 | 0,1 |
| | | 2 | 1,2 | 1 | 0,2 |
| | | 3 | 2 layers: reserved | 2 | 0,3 |
| | | 0 | 0,1,2 | 3 | 1,2 |
| | | 1-3 | 3 layers: reserved | 4 | 1,3 |
| | | | | 5 | 2,3 |
| | | | | 6-7 | 2 layers: reserved |
| | | | | 0 | 0,1,2 |
| | | | | 1 | 0,1,3 |
| | | | | 2 | 0,2,3 |
| | | | | 3 | 1,2,3 |
| | | | | 4-7 | 3 layer: reserved |
| | | | | 0 | 0,1,2,3 |
| | | | | 1-7 | 4 layers: reserved |

**Table 8:**

| Bit field mapped to index | SRI(s), *N*_{SRS} = 2 |
|---|---|
| 0 | 0 |
| 1 | 1 |

**Table 9:**

| Bit field mapped to index | SRI(s), *N_{SRS}* = 3 |
|---|---|
| 0 | 0 |
| 1 | 1 |
| 2 | 2 |
| 3 | Reserved |

**Table 10:**

| Bit field mapped to index | SRI(s), *N_{SRS}* = 4 |
|---|---|
| 0 | 0 |
| 1 | 1 |
| 2 | 2 |
| 3 | 3 |

In some embodiments, when the bit value of the received one first MAC CE corresponds to multiple SRS resources, spatial filters and/or second reference resources and/or second reference reference signals corresponding to these multiple SRS resources are the same, and/or, a spatial filter used by transmission of a backhaul link is the same as that of one or more SRS resources (such as SRS resources with the smallest or largest SRS resource identifier or index) in the multiple SRS resources. That is to say, the one or more SRS resources therein are first reference resources and/or first reference reference signals of the backhaul link.

In some embodiments, the first MAC CE indicates the SRS resource set by indicating an SRS resource set identifier (or SRS-ResourceSetId).

In some embodiments, the first MAC CE indicates the SRS resource set based on a mapping relationship between a bit value and one or more SRS resource sets.

In another method, that the first MAC CE provides an SRI comprises that: the first MAC CE indicates a PUCCH resource and/or a PUCCH resource group and/or a PUCCH resource set. Thereby, transmission on a backhaul link uses a spatial filter to which a PUCCH resource and/or a PUCCH resource group and/or a PUCCH resource set provided by the first MAC CE correspond(s).

In the above method, a third reference resource and/or a third reference reference signal corresponding to the PUCCH resource are predefined and/or indicated.

"Predefined" e.g. is an SSB or SSB index selected in a random access procedure, and "indicated" e.g. is indicated by RRC signaling and/or MAC signaling. The RRC signaling e.g. comprises: a PUCCH configuration (PUCCH-Config). The MAC signaling e.g. comprises: a PUCCH spatial relation Activation/Deactivation MAC CE, and/or an Enhanced PUCCH Spatial Relation Activation/Deactivation MAC CE, and/or a PUCCH spatial relation Activation/Deactivation for multiple TRP PUCCH repetition MAC CE.

For example, spatialRelationInfoToAddModList and/or spatialRelationInfoToAddModListSizeExt-v1610 and/or spatialRelationInfoToAddModListExt-v1610 in the PUCCH configuration configure(s) multiple pieces of spatial relation information, and for one PUCCH resource, the MAC CE activates one piece of the spatial relation information, thereby the third reference resource and/or the third reference reference signal corresponding to this PUCCH resource is/are provided/indicated by this activated spatial relation information.

For another example, if only one piece of spatial relation information is configured, the third reference resource and/or the third reference reference signal corresponding to the PUCCH resource is/are provided/indicated by this configured spatial relation information.

In the above embodiments, the third reference resource and/or the third reference reference signal corresponding to one PUCCH resource is/are used to determine a spatial relation for the PUCCH resource. Specifically, the spatial filter used for transmitting the PUCCH resource or used when a PUCCH is transmitted on the PUCCH resource is the same as a spatial filter for transmitting or receiving the third reference resource and/or the third reference reference signal. That is, the spatial filter to which the PUCCH resource corresponds is the same as a spatial filter to which the third reference resource and/or the third reference reference signal correspond(s). Further, the spatial filter to which the PUCCH resource provided by the first MAC CE corresponds is a spatial filter to which the third reference resource and/or the third reference reference signal of the PUCCH resource correspond(s).

In the above embodiments, the third reference resource and/or the third reference reference signal (reference RS) comprises an SSB, and/or an NZP CSI-RS resource, and/or an SRS resource. The SRS resource e.g. is used for beam management, but is not limited thereto.

In the above method, the first MAC CE e.g. may include: a PUCCH resource identifier (PUCCH-ResourceId) or a PUCCH resource group identifier (PUCCH-ResourceGroupId) or a PUCCH resource set identifier (PUCCH-ResourceSetId). The present disclosure is not limited thereto.

FIG. 7 is a schematic diagram of a structure of a first MAC CE according to the above embodiments. As shown in FIG. 7, the first MAC CE includes a first information field "Uplink TCI state ID or SRI" and a reserved bit "R", a corresponding protocol may be described as follows:

| |
|---|
| - Uplink TCI state ID or SRI: If (the *dl-OrJoint-TCIStateList* is configured as specified in TS 38.331 [5] *and) unifiedTCI-StateType* is configured with a value *joint,* this field contains *TCI-StateId* (comprising all 7 bits) of a Joint TCI State (configured **by *dl-OrJoint-TCI-State-ToAddModList* )(and *dl-OrJoint-TCI-State-ToReleaseList*) (in the *pdsch-Config* or *PDSCH-Config)* (in the *bwp-Dedicated* or *BWP-DownlinkDedicated)* in (or 'of') the active DL BWP (of Pcell) (of C-link),** which is used as the uplink beam indication for backhaul link transmission. If the *ul-TCI-StateList* is configured as specified in TS 38.331 [5], this field contains *TCI-UL-State-Id* (contained in the 6 rightmost bits) of an UL TCI State **(configured by *ul-TCI-StateList*) (in the *bwp-Dedicated* or *BWP-UplinkDedicated)* in (or 'of') the active UL BWP (of Pcell) (of C-link),** which is used as the uplink beam indication for backhaul link transmission, with the 1 remaining bit set to zero. **Otherwise, this field contains an *PUCCH-ResourceId* (comprising all 7 bits (of a PUCCH resource)(configured by *resourceToAddModList*) (in the *pucch-Config* or *PUCCH-Config*) (in the *bwp-Dedicated* or *BWP-UplinkDedicated)* in (or 'of') the active UL BWP (of Pcell) (of C-link), which is used as the uplink beam indication for backhaul link transmission;** |
| - R: Reserved bit, set to 0. |

In a further method, that the first MAC CE provides an SRI comprises that: the first MAC CE indicates spatial relation information (or a spatial relation) and/or a first reference resource and/or a first reference reference signal. Thereby, transmission on a backhaul link uses a spatial filter to which a reference signal included in spatial relation information provided by the first MAC CE corresponds.

In the above method, the SRI e.g. is spatial relation information.

In some embodiments, the first MAC CE indicates the spatial relation information by indicating a spatial relation information (or spatial relation) identifier and/or the first reference resource and/or the first reference reference signal.

For example, the first MAC CE indicates the spatial relation information by indicating a spatial relation information (or spatial relation) identifier and/or resources or reference signals used for a spatial relationship/relation.

For example, the first MAC CE indicates a PUCCH sptail relation info ID (such as PUCCH-SpatialRelationInfoId or PUCCH-SpatialRelationInfoId-v1610).

FIG. 8 is a schematic diagram of a structure of a first MAC CE according to the above embodiments. As shown in FIG. 8, the first MAC CE includes a first information field "Uplink TCI state ID or SRI" and a reserved bit "R", a corresponding protocol may be described as follows:

| |
|---|
| - Uplink TCI state ID or SRI: If (the *dl-OrJoint-TCIStateList* is configured as specified in TS 38.331 [5] and) *unifiedTCI-StateType* is configured with a value *joint,* this field contains *TCI-*S*tateId* (comprising all 7 bits) of a Joint TCI State (configured **by *dl-OrJoint-TCI-State-ToAddModList* )(and *dl-OrJoint-TCI-State-ToReleaseList*) (in the *pdsch-Config* or *PDSCH-Config)* (in the *bwp-Dedicated* or *BWP-DownlinkDedicated)* in (or 'of') the active DL BWP (of Pcell) (of C-link),** which is used as the uplink beam indication for backhaul link transmission. If the *ul-TCI-StateList* is configured as specified in TS 38.331 [5], this field contains *TCI-UL-State-Id* (contained in the 6 rightmost bits) of an UL TCI State **(configured by *ul-TCI-StateList*) (in the *bwp-Dedicated* or *BWP-UplinkDedicated)* in (or 'of') the active UL BWP (of Pcell) (of C-link),** which is used as the uplink beam indication for backhaul link transmission, with the 1 remaining bit set to zero. **Otherwise, this field contains a *PUCCH-SpatialRelationInfoId* and/or *PUCCH-SpatialRelationInfoId-v1610*(contained in the 6 rightmost bits) (of a PUCCH spatial info (PUCCH-SpatialRelationInfo))(configured by *spatialRelationInfoToAddModList* and/or *spatialRelationInfoToAddModListSizeExt-v1610* and/or *spatialRelationInfoToAddModListExt-v1610*) (in the *pucch-Config* or *PUCCH-Config*) (in the *bwp-Dedicated* or *BWP-UplinkDedicated)* in (or 'of') the active UL BWP (of Pcell) (of C-link), which is used as the uplink beam indication for backhaul link transmission, with the 1 remaining bits set to zero;** |
| - R: Reserved bit, set to 0. |

For another example, the first MAC CE indicates a resource or reference signal used for a spatial relationship/relation, the resource or reference signal e.g. comprising: an SSB, an NZP CSI-RS or an SRS resource. For example, the first MAC CE comprises an SSB index or an NZP CSI-RS resource index or an SRS resource index, including or not including a BWP ID and/or a serving cell ID.

In some embodiments, the structure of the first MAC CE involved in the embodiments of the present disclosure is shown in FIG. 3 to FIG. 8, and the first MAC CE may be described in a protocol as follows:

| |
|---|
| 6.1.3.yNCR Uplink Backhaul Link Beam Indication MAC CE |
| The NCR Uplink Backhaul Beam Indication MAC CE is identified by MAC subheader with eLCID as specified in Table 6.2.1-1b. It has a fixed size and consists of a single octet defined as follows (Figure 6.1.3.z-1): |
| - Uplink TCI state ID or SRI: This field is used to indicate the uplink beam to be used for backhaul link transmission. If the *dl-OrJoint-TCIStateList* is configured as specified in TS 38.331 [5] and *unifiedTCI-StateType* is configured with a value *joint,* this field contains *TCI-StateId* (comprising all 7 bits) of a Joint TCI State **in the active DL BWP,** which is used as the uplink beam indication for backhaul link transmission. If the *ul-TCI-StateList* is configured as specified in TS 38.331 [5], |
| this field contains *TCI-UL-State-Id* (contained in the 6 rightmost bits) of an UL TCI State **in the active UL BWP,** which is used as the uplink beam indication for backhaul link transmission, with the 1 remaining bit set to zero. Otherwise, this field contains an *SRS-ResourceId* **in the active UL BWP** (contained in the 4 rightmost bits) which is used as the uplink beam indication for backhaul link transmission, with the 3 remaining bits set to zero; |
| - R: Reserved bit, set to 0. |
| **Figure 6****.****1.3****.z-1: NCR Uplink Backhaul Beam Indication MAC CE** |

In some embodiments, NCR/NCR-MT/C-link support or do not support a unified TCI state, wherein that the NCR/NCR-MT/C-link support a unified TCI state includes that: the NCR/NCR-MT/C-link support a joint TCI and/or a separate TCI. Conversely, that the NCR/NCR-MT/C-link do not support a unified TCI state includes that: the NCR/NCR-MT/C-link do not support a joint TCI and a separate TCI. If the NCR/NCR-MT/C-link support the joint TCI, the NCR/NCR-MT/C-link transmit first capability information (unifiedJointTCI-r17) (to a network device). If the NCR/NCR-MT/C-link support the separate TCI, the NCR/NCR-MT/C-link transmit second capability information (unifiedSeparateTCI-r17) (to the network device).

For example, the following description may be made in the protocol:

| ***unifiedJointTCI-r17*** | |
|---|---|
| Indicates the support of unified TCI state operation with joint DL/UL TCI update for intra-cell beam management including the support of: | |
| | - One MAC-CE activated joint TCI state per CC in a band |
| | - TCI state indication for update and activation of MAC CE based TCI state indication for one active TCI state |

| ***unifiedSeparateTCI-r17*** | |
|---|---|
| Indicates the support of unified TCI state operation with joint DL/UL TCI update for intra-cell beam management including the support of: | |
| | - One MAC-CE activated DL TCI state per CC in a band |
| | - One MAC-CE activated UL TCI state per CC in a band |
| | - TCI state indication for update and activation including MAC CE based TCI state indication for one active DL/UL TCI state |

In some embodiments, NCR/NCR-MT/C-link/NCR-Fwd/BH-link optionally supports (i.e., may support or may not support) (i) a (uplink) backhaul link beam indication (first MAC CE or second MAC CE) for a non-unified TCI state (or based on SRI), and/or optionally supports (ii) a backhaul link beam indication (including joint and separate) for a unified TCI state, and/or optionally supports (iii) a backhaul link beam indication for a joint unified TCI state type, and/or, optionally supports (iv) a backhaul link beam indication for a separate unified TCI state type.

For example, in a case where it supports (i) a (uplink) backhaul link beam indication for a non-unified TCI state, a first MAC CE including SRI is received, or a second MAC CE is received, that is to say, the first MAC CE including SRI is supported, or the second MAC CE is supported. In a case where it supports (ii) a backhaul link beam indication (including joint and separate) for a unified TCI state, a backhaul link beam indication for a joint unified TCI state type and a backhaul link beam indication for a separate unified TCI state type are supported, that is to say, the first MAC CE is supported. In a case where it supports (iii) a backhaul link beam indication for a joint unified TCI state type, that is to say, the first MAC CE including a joint TCI state is supported. In a case where it supports (iv) a backhaul link beam indication for a separate unified TCI state type, that is to say, the first MAC CE including a UL TCI state is supported.

The capabilities are related to whether the NCR/NCR-MT/C-link support a unified TCI state and/or support what kind of unified TCI state type.

For example, if the NCR/NCR-MT/C-link does not support the unified TCI state, only the above (i) is optionally supported for the NCR/NCR-MT/C-link/NCR-Fwd/BH-link. For example, the NCR/NCR-MT/C-link/NCR-Fwd/BH-link optionally supports (i.e., may support or may not support) a (uplink) backhaul link beam indication (first MAC CE or second MAC CE) for a non-unified TCI state (or based on SRI), i.e., optionally support the above (i). In this situation, the above (ii), (iii) and (iv) are not supported.

For another example, if the NCR/NCR-MT/C-link supports the unified TCI state, the above (i), (ii), (iii) and (iv) are optionally supported for the NCR/NCR-MT/C-link/NCR-Fwd/BH-link. For example, the NCR/NCR-MT/C-link/NCR-Fwd/BH-link optionally supports (i.e., may support or may not support) a (uplink) backhaul link beam indication (first MAC CE or second MAC CE) for a non-unified TCI state (or based on SRI), and optionally supports a backhaul link beam indication for a joint unified TCI state, i.e., optionally supports the above (iii), and optionally supports a backhaul link beam indication for a separate unified TCI state type, i.e., optionally supports the above (iv).

For another example, if the NCR/NCR-MT/C-link supports the joint unified TCI state type and does not support the separate unified TCI state type, it optionally supports (i.e., may support or may not support) a (uplink) backhaul link beam indication (first MAC CE or second MAC CE) for a non-unified TCI state (or based on SRI), i.e., optionally supports the above (i), and optionally supports a backhaul link beam indication for a separate unified TCI state type, i.e., optionally supports the above (iv).

In some embodiments, the NCR/NCR-MT transmit third capability information (to the network device), which is used to indicate that the NCR/NCR-MT/C-link/NCR-Fwd/BH-link supports one or more of the above (i), (ii), (iii) and (iv). For example, a value range of the third capability information includes {Rel-15/16 (non-unified TCI), Rel-17 (unified TCI), both}, where "Rel-15/16 (non-unified TCI)" denotes supporting the above (i), "Rel-17 (unified TCI)" denotes supporting the above (ii), and "both" denotes supporting the above (i) and (ii). And if a control link does not support a unified TCI, a value of the third capability information may and can be set to "Rel-15/16 (non-unified TCI)"; otherwise, may be set to any one of the values.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, after receiving a first MAC CE for indicating an uplink backhaul link beam, transmission of a repeater on a backhaul link uses a spatial filter to which a TCI state or an SRI provided (or indicated) by the first MAC CE corresponds, thereby the spatial filter used for transmission on the backhaul link is clarified, and network performance is improved.

### Embodiments of a second aspect

Embodiments of the present disclosure provide a communication method, which is described from a repeater side, the contents same as the embodiments of the first aspect are not repeated.

FIG. 9 is a schematic diagram of a communication method in the embodiments of the present disclosure. As shown in FIG. 9, the method includes:
901, a repeater receives a first or second MAC CE for indicating an uplink backhaul link beam; and
902, transmission of the repeater on a backhaul link uses a spatial filter to which a TCI state provided by the first MAC CE or an SRI provided by the second MAC CE corresponds.

It should be noted that the above FIG. 9 only schematically describes the embodiments of the present disclosure, but the present disclosure is not limited thereto. For example, an execution step of each operation may be adjusted appropriately, moreover other some operations may be increased or operations therein may be reduced. Persons skilled in the art may make appropriate modifications according to the above contents, not limited to the records in the above FIG. 9.

According to the embodiments of the present disclosure, after receiving a first MAC CE and/or a second MAC CE for indicating an uplink backhaul link beam, transmission of a repeater on a backhaul link uses a spatial filter to which a TCI state or an SRI provided (or indicated) by the first MAC CE and/or the second MAC CE corresponds, thereby the spatial filter used for transmission on the backhaul link is clarified, and network performance is improved.

In the embodiments of the present disclosure, identifiers and/or sizes of the first MAC CE and the second MAC CE are different. For example, values of logical channel identifiers (LCIDs or eLCIDs) corresponding to the first MAC CE and the second MAC CE are different.

In some embodiments, the first MAC CE is used to indicate an uplink backhaul link beam in a case where the repeater is configured with a unified TCI state.

In some embodiments, the second MAC CE is used to indicate an uplink backhaul link beam in a case where the repeater does not support a unified TCI state and/or is not configured with the unified TCI state.

According to the above embodiments, both the first MAC CE and the second MAC CE are used to indicate an uplink backhaul link beam, a difference lies in that for different TCI states, transmission on a backhaul link uses a spatial filter corresponding to information (a TCI state or an SRI) provided by different MAC CEs. Thereby, a spatial filter used for the transmission on the backhaul link is further clarified, further enhancing the network performance.

In the embodiments of the present disclosure, contents indicated by the second MAC CE and corresponding indication method are the same as contents indicated by the first MAC CE and corresponding indication method for the non-unified TCI state in the embodiments of the first aspect. Details are omitted here, and only the basic contents are described.

In some embodiments, a second reference resource and/or second reference reference signal to which an SRS resource corresponds is/are indicated by RRC signaling and/or MAC signaling.

In some embodiments, that the second MAC CE provides an SRI comprises that, the second MAC CE indicates an SRS resource and/or an SRS resource set.

For a case of indicating an SRS resource, in some embodiments, the SRS resource indicated by the second MAC CE is periodic or semi-persistent or aperiodic; and/or, the SRS resource indicated by the second MAC CE is used for beam management or codebook or non-codebook or antenna switching or PDC; and/or, the SRS resource indicated by the second MAC CE is configured by third configuration information and/or fourth configuration information; and/or, the SRS resource indicated by the second MAC CE is in an active uplink BWP.

In the above embodiments, the second MAC CE may indicate an SRS resource from one or more SRS resources. The one or more SRS resources may be configured by third configuration information and/or fourth configuration information.

In the above embodiments, the one or more SRS resources may:
have a specific resource type; and/or,
have a specific purpose; and/or,
belong to a specific SRS resource set; and/or,
have an SRS resource identifier less than or not greater than a first value; and/or,
belong to former N or latter N SRS resources arranged in an ascending or descending order of indices; and/or,
belong to former N or latter N SRS resources arranged in an ascending or descending order of SRS resource identifiers.

In the above embodiments, the specific resource type may comprise: periodic or semi-persistent or aperiodic; the specific purpose may comprise: beam management or codebook or non-codebook or antenna switching or PDC; and the specific spatial relation information comprises: that a corresponding second reference resource and/or second reference reference signal is/are in an active downlink BWP or uplink BWP.

In the above embodiments, the specific SRS resource set may be predefined or indicated.

In the above embodiments, the specific SRS resource set may:
have a specific resource type; and/or,
have a specific purpose; and/or,
have a specific SRS resource set identifier; and/or,
have a specific index; and/or,
be indicated by the second MAC CE.

In the above embodiments, the specific purpose may comprise: beam management or codebook or non-codebook or antenna switching or PDC; the specific resource type may comprise: periodic or semi-persistent or aperiodic; the specific SRS resource set identifier may comprise: maximum or minimum SRS resource set identifier, or relatively large or small SRS resource set identifier, or an SRS resource set identifier equal to a specific value; and the specific index may comprise: a first or last one in an SRS resource set configured by fourth configuration information.

For a case of indicating an SRS resource set, in some embodiments, the SRS resource set indicated by the second MAC CE is periodic or semi-persistent or aperiodic; and/or, the SRS resource set indicated by the second MAC CE is used for beam management or codebook or non-codebook or antenna switching or PDC; and/or, the SRS resource set indicated by the second MAC CE is configured by fourth configuration information; and/or, the SRS resource set indicated by the second MAC CE is in an active uplink BWP.

In the above embodiments, the second MAC CE may indicate an SRS resource set from one or more SRS resource sets. The one or more SRS resource sets may be configured by the fourth configuration information.

In the above embodiments, the one or more SRS resource sets may:
have a specific resource type; and/or,
have a specific purpose; and/or,
have a specific spatial relation configuration; and/or,
only comprise one SRS resource; and/or,
have an SRS resource set identifier less than or not greater than a second value; and/or,
belong to former N or latter N SRS resource sets arranged in an ascending or descending order of indices; and/or,
belong to former N or latter N SRS resource sets arranged in an ascending or descending order of SRS resource set identifiers.

In the above embodiments, the specific purpose may comprise: beam management or codebook or non-codebook or antenna switching or PDC; the specific resource type may comprise: periodic or semi-persistent or aperiodic; and the specific spatial relation configuration may comprise that spatial relation information and/or second reference resources and/or second reference reference signals of all SRS resources is/are identical, for example spatial relation information and/or second reference resources and/or second reference reference signals of all SRS resources in one SRS resource set is/are identical.

In some embodiments, the same information field of the second MAC CE is used to indicate the SRS resource set and the SRS resource; or, different information fields of the second MAC CE are respectively used to indicate the SRS resource set and the SRS resource.

In some embodiments, the second MAC CE indicates the SRS resource by indicating an SRS resource identifier; or, the second MAC CE indicates the SRS resource based on a mapping relationship between a bit value and an SRS resource in the one or more SRS resources.

In some embodiments, the second MAC CE indicates the SRS resource set by indicating an SRS resource set identifier; or, the second MAC CE indicates the SRS resource set based on a mapping relationship between a bit value and the one or more SRS resource sets.

In some other embodiments, that the second MAC CE provides an SRI comprises that: the second MAC CE indicates a PUCCH resource and/or a PUCCH resource group and/or a PUCCH resource set.

In the above embodiments, a third reference resource and/or a third reference reference signal corresponding to the PUCCH resource are predefined and/or indicated.

In the above embodiments, the second MAC CE may comprise: a PUCCH resource identifier or a PUCCH resource group identifier or a PUCCH resource set identifier.

In some further embodiments, that the second MAC CE provides an SRI comprises that: the second MAC CE indicates spatial relation information (or a spatial relation) and/or a first reference resource and/or a first reference reference signal.

In the above embodiments, the second MAC CE may indicate the spatial relation information by indicating a spatial relation information identifier (or spatial relation identifier) and/or the first reference resource and/or the first reference reference signal.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the above embodiments, after receiving a first MAC CE and/or a second MAC CE for indicating an uplink backhaul link beam, transmission of a repeater on a backhaul link uses a spatial filter to which a TCI state or an SRI provided (or indicated) by the first MAC CE and/or the second MAC CE corresponds, thereby the spatial filter used for transmission on the backhaul link is clarified, and network performance is improved.

### Embodiments of a third aspect

Embodiments of the present disclosure provide a communication method, which is described from a network device side, the contents same as the embodiments of the first and second aspects are not repeated any more.

FIG. 10 is a schematic diagram of a communication method in the embodiments of the present disclosure, corresponding to the embodiments of the first aspect. As shown in FIG. 10, the method includes:
1001, a network device transmits a first MAC CE for indicating an uplink backhaul link beam to a repeater, so that transmission of the repeater on a backhaul link uses a spatial filter to which a TCI state or an SRI provided by the first MAC CE corresponds.

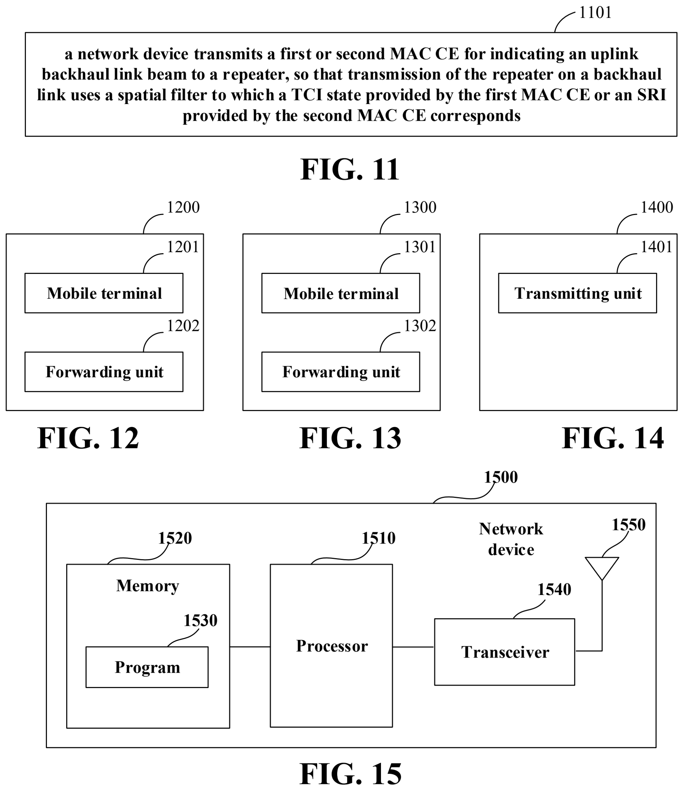

FIG. 11 is a schematic diagram of a communication method in the embodiments of the present disclosure, corresponding to the embodiments of the second aspect. As shown in FIG. 11, the method includes:
1101, a network device transmits a first or second MAC CE for indicating an uplink backhaul link beam to a repeater, so that transmission of the repeater on a backhaul link uses a spatial filter to which a TCI state provided by the first MAC CE or an SRI provided by the second MAC CE corresponds.

According to the above embodiments, a network device transmits a first MAC CE and/or a second MAC CE for indicating an uplink backhaul link beam to a repeater, so that transmission of the repeater on a backhaul link uses a spatial filter to which a TCI state or an SRI provided by the first MAC CE and/or the second MAC CE corresponds, which clarifies the spatial filter used for transmission on the backhaul link, and improves network performance.

### Embodiments of a fourth aspect

Embodiments of the present disclosure provide a repeater, the repeater may be e.g. the aforementioned NCR, or may be a network device or a terminal equipment having a forwarding function, or may be one or more parts or components configured in the NCR, the network device or the terminal equipment.

FIG. 12 is a schematic diagram of a repeater in the embodiments of the present disclosure. The principle of the repeater to solve a problem is the same as the method in the embodiments of the first aspect, thus its specific implementation may refer to the embodiments of the first aspect, the same contents will not be repeated.

As shown in FIG. 12, the repeater 1200 further comprises:
a mobile terminal 1201 configured to receive a first MAC CE for indicating an uplink backhaul link beam; and
a forwarding unit 1202 with transmission on a backhaul link using a spatial filter to which a TCI state or an SRI provided by the first MAC CE corresponds.

In some embodiments, in a case where the repeater does not perform transmission simultaneously on the backhaul link and a control link, the transmission of the forwarding unit 1202 on the backhaul link uses the spatial filter to which the TCI state or the SRI provided by the first MAC CE corresponds.

In some embodiments, in a case where the repeater performs transmission simultaneously on the backhaul link and a control link, the spatial filter for the transmission on the backhaul link is the same as that for the control link.

In some embodiments, the SRI comprises: an SRS resource, and/or an SRS resource indicator, and/or an SRS resource ID, and/or an SRS resource set, and/or an SRS resource set indicator, and/or an SRS resource set ID, and/or a PUCCH resource, and/or a PUCCH resource indicator, and/or a PUCCH resource ID, and/or a PUCCH resource set, and/or a PUCCH resource set indicator, and/or a PUCCH resource set ID, and/or a PUCCH resource group, and/or a PUCCH resource group indicator, and/or a PUCCH resource group ID, and/or spatial relation information, and/or a spatial relation information indicator and/or a spatial relation information ID.

In the above embodiments, the spatial relation information indicates the first reference resource and/or the first reference reference signal (reference RS), and/or, the spatial relation information includes: an SSB index, and/or a NZP CSI-RS resource index, and/or an SRS resource ID.

In the above embodiments, the first reference resource and/or the first reference reference signal (reference RS) comprise(s): a PUCCH resource, and/or an SSB, and/or an NZP CSI-RS resource, and/or an SRS resource.

In some embodiments, an information field included in the first MAC CE is fixed or variable.

In the above embodiments, the first MAC CE includes a first information field, or, in a case where the repeater is configured with a unified TCI state, the first MAC CE includes a first information field; and in a case where the repeater is not configured with a unified TCI state, the first MAC CE includes a first information field and a second information field.

In some embodiments, the first MAC CE has a fixed size or a variable size.

In the above embodiments, the first MAC CE has one octet, or, in a case where the repeater is configured with a unified TCI state, the first MAC CE has one octet; and in a case where the repeater is not configured with a unified TCI state, the first MAC CE has two octets; wherein one octet includes 8 bits.

In some embodiments, in a case where the repeater is configured with a unified TCI state type with a type being "joint" (i.e., *unifiedTCI-StateType* = joint) and/or is configured with a joint TCI state, the first MAC CE includes an ID of a joint TCI state.

In the above embodiments, the joint TCI state is a TCI state of an active DL BWP, or, the joint TCI state is a TCI state configured by first configuration information in the active DL BWP.

In some embodiments, in a case where the repeater is configured with a unified TCI state type with a type being "separate" (i.e., *unifiedTCI-StateType =* seperate) and/or is configured with an uplink TCI state (*ul-TCI-StateList*)*,* the first MAC CE includes an ID of an UL TCI state.

In the above embodiments, the UL TCI state is a TCI state of an active UL BWP, or, the UL TCI state is a TCI state configured by second configuration information in the active UL BWP.

In some embodiments, in a case where the repeater does not support a unified TCI state and/or is not configured with a unified TCI state, the first MAC CE provides an SRI.

In some embodiments, that the first MAC CE provides an SRI comprises that, the first MAC CE indicates an SRS resource and/or an SRS resource set.

In some embodiments, the SRS resource indicated by the first MAC CE:
has a specific resource type; and/or,
has a specific purpose; and/or,
has specific spatial relation information; and/or
belongs to a specific SRS resource set; and/or,
has an SRS resource identifier less than or not greater than a first value; and/or,
belongs to former N or latter N SRS resources arranged in an ascending or descending order of indices; and/or,
belongs to former N or latter N SRS resources arranged in an ascending or descending order of SRS resource identifiers.

In some embodiments, a second reference resource and/or second reference reference signal to which the SRS resource corresponds is/are indicated by RRC signaling and/or MAC signaling.

In some embodiments, the SRS resource indicated by the first MAC CE is:
periodic or semi-persistent or aperiodic; and/or,
used for beam management or codebook or non-codebook or antenna switching or PDC; and/or,
configured by third configuration information and/or fourth configuration information; and/or,
in an active uplink BWP.

In some embodiments, the first MAC CE indicates the SRS resource from one or more SRS resources.

In the above embodiments, the one or more SRS resources are configured by the third configuration information and/or by the fourth configuration information.

In the above embodiments, the one or more SRS resources:
have a specific resource type; and/or,
have a specific purpose; and/or,
have specific spatial relation information; and/or
belong to a specific SRS resource set; and/or,
have an SRS resource identifier less than or not greater than a first value; and/or,
belong to former N or latter N SRS resources arranged in an ascending or descending order of indices; and/or,
belong to former N or latter N SRS resources arranged in an ascending or descending order of SRS resource identifiers.

In the above embodiments, the specific resource type comprises: periodic or semi-persistent or aperiodic; the specific purpose comprises: beam management or codebook or non-codebook or antenna switching or PDC; and the specific spatial relation information comprises: that a corresponding second reference resource and/or second reference reference signal is/are in an active downlink BWP or uplink BWP.

In the above embodiments, the specific SRS resource set is predefined or indicated.

In the above embodiments, the specific SRS resource set:
has a specific resource type; and/or,
has a specific purpose; and/or,
has a specific SRS resource set identifier; and/or,
has a specific index; and/or,
is indicated by the first MAC CE.

In the above embodiments, the specific purpose comprises: beam management or codebook or non-codebook or antenna switching or PDC; the specific resource type comprises: periodic or semi-persistent or aperiodic; the specific SRS resource set identifier comprises: maximum or minimum SRS resource set identifier, or relatively large or small SRS resource set identifier, or SRS resource set identifier equal to a specific value; and the specific index comprises: a first or last one in an SRS resource set configured by fourth configuration information.

In some embodiments, the SRS resource set indicated by the first MAC CE:
is periodic, or semi-persistent, or aperiodic; and/or,
is used for beam management or codebook or non-codebook or antenna switching or PDC; and/or,
is configured by the fourth configuration information; and/or,
is in an active uplink BWP.

In the above embodiments, the first MAC CE indicates the SRS resource set from one or more SRS resource sets.

In the above embodiments, the one or more SRS resources are configured by the fourth configuration information.

In the above embodiments, the one or more SRS resource sets:
have a specific resource type; and/or,
have a specific purpose; and/or,
have a specific spatial relation configuration; and/or,
only comprise one SRS resource; and/or,
have an SRS resource set identifier less than or not greater than a second value; and/or,
belong to former N or latter N SRS resource sets arranged in an ascending or descending order of indices; and/or,
belong to former N or latter N SRS resource sets arranged in an ascending or descending order of SRS resource set identifiers.

In the above embodiments, the specific purpose comprises: beam management or codebook or non-codebook or antenna switching or PDC; the specific resource type comprises: periodic or semi-persistent or aperiodic; and the specific spatial relation configuration comprises that spatial relation information and/or second reference resources and/or second reference reference signals of all SRS resources in one SRS resource set is/are identical.

In some embodiments, the same information field of the first MAC CE is used to indicate the SRS resource set and the SRS resource; or, different information fields of the first MAC CE are respectively used to indicate the SRS resource set and the SRS resource.

In some embodiments, the first MAC CE indicates the SRS resource by indicating an SRS resource identifier; or, the first MAC CE indicates the SRS resource based on a mapping relationship between a bit value and an SRS resource in the one or more SRS resources.

In some embodiments, the first MAC CE indicates the SRS resource set by indicating an SRS resource set identifier; or, the first MAC CE indicates the SRS resource set based on a mapping relationship between a bit value and the one or more SRS resource sets.

In some embodiments, that the first MAC CE provides an SRI comprises that:
the first MAC CE indicates a PUCCH resource and/or a PUCCH resource group and/or a PUCCH resource set.

In the above embodiments, a third reference resource and/or a third reference reference signal corresponding to the PUCCH resource are predefined and/or indicated.

In the above embodiments, the first MAC CE comprises: a PUCCH resource identifier or a PUCCH resource group identifier or a PUCCH resource set identifier.

In some embodiments, that the first MAC CE provides an SRI comprises that:
the first MAC CE indicates spatial relation information and/or a first reference resource and/or a first reference reference signal.

In the above embodiments, the first MAC CE indicates the spatial relation information by indicating a spatial relation information identifier and/or the first reference resource and/or the first reference reference signal.

FIG. 13 is another schematic diagram of a repeater in the embodiments of the present disclosure. The principle of the repeater to solve a problem is the same as the method in the embodiments of the second aspect, thus its specific implementation may refer to the embodiments of the second aspect, the same contents will not be repeated.

As shown in FIG. 13, the repeater 1300 further comprises:
a mobile terminal 1301 configured to receive a first MAC CE or a second MAC CE for indicating an uplink backhaul link beam; and
a forwarding unit 1302 with transmission on a backhaul link using a spatial filter to which a TCI state provided by the first MAC CE or an SRI provided by the second MAC CE corresponds.

In some embodiments, identifiers and/or sizes of the first MAC CE and the second MAC CE are different.

In some embodiments, the first MAC CE is used to indicate an uplink backhaul link beam in a case where the repeater is configured with a unified TCI state.

In some embodiments, the second MAC CE is used to indicate an uplink backhaul link beam in a case where the repeater does not support a unified TCI state and/or is not configured with the unified TCI state.

In some embodiments, that the second MAC CE provides an SRI comprises that:
the second MAC CE indicates an SRS resource and/or an SRS resource set.

In some embodiments, a second reference resource and/or second reference reference signal to which the SRS resource corresponds is/are indicated by RRC signaling and/or MAC signaling.

In some embodiments, the SRS resource indicated by the second MAC CE:
is periodic, or semi-persistent, or aperiodic; and/or,
is used for beam management or codebook or non-codebook or antenna switching or PDC; and/or,
configured by third configuration information and/or fourth configuration information; and/or,
in an active uplink BWP.

In the above embodiments, the second MAC CE indicates the SRS resource from one or more SRS resources.

In the above embodiments, the one or more SRS resources are configured by the third configuration information and/or by the fourth configuration information.

In the above embodiments, the one or more SRS resources:
have a specific resource type; and/or,
have a specific purpose; and/or,
have specific spatial relation information; and/or,
belong to a specific SRS resource set; and/or,
have an SRS resource identifier less than or not greater than a first value; and/or,
belong to former N or latter N SRS resources arranged in an ascending or descending order of indices; and/or,
belong to former N or latter N SRS resources arranged in an ascending or descending order of SRS resource identifiers.

In the above embodiments, the specific resource type comprises: periodic or semi-persistent or aperiodic; the specific purpose comprises: beam management or codebook or non-codebook or antenna switching or PDC; and the specific spatial relation information comprises: that a corresponding second reference resource and/or second reference reference signal is/are in an active downlink BWP or uplink BWP.

In the above embodiments, the specific SRS resource set is predefined or indicated.

In the above embodiments, the specific SRS resource set:
has a specific resource type; and/or,
has a specific purpose; and/or,
has a specific SRS resource set identifier; and/or,
has a specific index; and/or,
is indicated by the second MAC CE.

In the above embodiments, the specific purpose comprises: beam management or codebook or non-codebook or antenna switching or PDC; the specific resource type comprises: periodic or semi-persistent or aperiodic; the specific SRS resource set identifier comprises: maximum or minimum SRS resource set identifier, or relatively large or small SRS resource set identifier, or SRS resource set identifier equal to a specific value; and the specific index comprises: a first or last one in an SRS resource set configured by fourth configuration information.

In some embodiments, the SRS resource set indicated by the second MAC CE:
is periodic, or semi-persistent, or aperiodic; and/or,
is used for beam management or codebook or non-codebook or antenna switching or PDC; and/or,
is configured by the fourth configuration information; and/or,
is in an active uplink BWP.

In the above embodiments, the second MAC CE indicates the SRS resource set from one or more SRS resource sets.

In the above embodiments, the one or more SRS resources are configured by the fourth configuration information.

In the above embodiments, the one or more SRS resource sets:
have a specific resource type; and/or,
have a specific purpose; and/or,
have a specific spatial relation configuration; and/or,
only comprise one SRS resource; and/or,
have an SRS resource set identifier less than or not greater than a second value; and/or,
belong to former N or latter N SRS resource sets arranged in an ascending or descending order of indices; and/or,
belong to former N or latter N SRS resource sets arranged in an ascending or descending order of SRS resource set identifiers.

In the above embodiments, the specific purpose comprises: beam management or codebook or non-codebook or antenna switching or PDC; the specific resource type comprises: periodic or semi-persistent or aperiodic; and the specific spatial relation configuration comprises that spatial relation information and/or second reference resources and/or second reference reference signals of all SRS resources in one SRS resource set is/are identical.

In some embodiments, the same information field of the second MAC CE is used to indicate the SRS resource set and the SRS resource; or, different information fields of the second MAC CE are respectively used to indicate the SRS resource set and the SRS resource.

In some embodiments, the second MAC CE indicates the SRS resource by indicating an SRS resource identifier; or, the second MAC CE indicates the SRS resource based on a mapping relationship between a bit value and an SRS resource in the one or more SRS resources.

In some embodiments, the second MAC CE indicates the SRS resource set by indicating an SRS resource set identifier; or, the second MAC CE indicates the SRS resource set based on a mapping relationship between a bit value and the one or more SRS resource sets.

In some embodiments, that the second MAC CE provides an SRI comprises that:
the second MAC CE indicates a PUCCH resource and/or a PUCCH resource group and/or a PUCCH resource set.

In the above embodiments, a third reference resource and/or a third reference reference signal corresponding to the PUCCH resource are predefined and/or indicated.

In the above embodiments, the second MAC CE comprises: a PUCCH resource identifier or a PUCCH resource group identifier or a PUCCH resource set identifier.

In some embodiments, that the second MAC CE provides an SRI comprises that:
the second MAC CE indicates spatial relation information and/or a first reference resource and/or a first reference reference signal.

In the above embodiments, the second MAC CE indicates the spatial relation information by indicating a spatial relation information identifier and/or the first reference resource and/or the first reference reference signal.

Moreover, for the sake of simplicity, FIG. 12 and FIG. 13 only exemplarily show a connection relationship or signal direction between components or modules, however persons skilled in the art should know that various relevant technologies such as bus connection can be used. The above components or modules may be realized by a hardware facility such as a processor, a memory, a transmitter, a receiver, etc. The embodiments of the present disclosure have no limitation to this.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the above embodiments, a network device transmits a first MAC CE and/or a second MAC CE for indicating an uplink backhaul link beam to a repeater, so that transmission of the repeater on a backhaul link uses a spatial filter to which a TCI state or an SRI provided by the first MAC CE and/or the second MAC CE corresponds, which clarifies the spatial filter used for transmission on the backhaul link, and improves network performance.

### Embodiments of a fifth aspect

Embodiments of the present disclosure provide a network device.

FIG. 14 is a schematic diagram of a network device in the embodiments of the present disclosure. The principle of the network device to solve a problem is the same as the method in the embodiments of the third aspect, thus its specific implementation can refer to the embodiments of the third aspect, the same contents will not be repeated.

As shown in FIG. 14, the network device 1400 in the embodiments of the present disclosure comprises:
a transmitting unit 1401 configured to transmit a first MAC CE for indicating an uplink backhaul link beam to a repeater, so that transmission of the repeater on a backhaul link uses a spatial filter to which a TCI state or an SRI provided by the first MAC CE corresponds; or, transmit a first MAC CE or a second MAC CE for indicating an uplink backhaul link beam to a repeater, so that transmission of the repeater on a backhaul link uses a spatial filter to which a TCI state provided by the first MAC CE or an SRI provided by the second MAC CE corresponds.

It's worth noting that the above only describes components or modules related to the present disclosure, but the present disclosure is not limited thereto. The network device 1400 in the embodiments of the present disclosure may further comprise other components or modules. For detailed contents of these components or modules, relevant technologies may be referred to.

Moreover, for the sake of simplicity, FIG. 14 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

### Embodiments of a sixth aspect

Embodiments of the present disclosure provide a communication system. FIG. 1 is a schematic diagram of a communication system in the embodiments of the present disclosure. As shown in FIG. 1, the communication system 100 comprises a network device 101, a repeater 102 and a terminal equipment 103. For the sake of simplicity, FIG. 1 only takes one network device, one repeater and one terminal equipment as examples to describe, but the embodiments of the present disclosure are not limited thereto.

In the embodiments of the present disclosure, transmission of existing or further implementable services can be carried out between the network device 101 and the terminal equipment 103. For example, these services may include but be not limited to: enhanced Mobile Broadband (eMBB), massive Machine Type Communication (mMTC), Ultra-Reliable Low-Latency Communication (URLLC), Internet of Vehicles (V2X) communication and so on.

In the embodiments of the present disclosure, the network device 101 is configured to perform the method described in the embodiments of the third aspect, and the repeater 102 is configured to perform the method described in the embodiments of the first or second aspect, their contents are incorporated here and are not repeated here.

Embodiments of the present disclosure further provide a network device, which for example may be a base station (gNB), but the present disclosure is not limited to this, it may also be other network device.

FIG. 15 is a composition schematic diagram of a network device in the embodiments of the present disclosure. As shown in FIG. 15, the network device 1500 may comprise: a processor 1510 (such as a central processing unit (CPU)) and a memory 1520; the memory 1520 is coupled to the processor 1510. The memory 1520 may store various data; moreover, also stores a program 1530 for information processing, and executes the program 1530 under the control of the processor 1510.

For example, the processor 1510 may be configured to execute a program to implement the method as described in the embodiments of the third aspect.

In addition, as shown in FIG. 15, the network device 1500 may further comprise: a transceiver 1540 and an antenna 1550, etc.; wherein the functions of said components are similar to related arts, which are not repeated here. It's worth noting that the network device 1500 does not have to include all the components shown in FIG. 15. Moreover, the network device 1500 may further comprise components not shown in FIG. 15, related arts may be referred to.

Embodiments of the present disclosure further provides a repeater, the repeater e.g. may be a transponder, a radio frequency repeater, a radio frequency relay, a transponder node, a repeater node, a relay node, an intelligent transponder, an intelligent repeater, an intelligent relay, an intelligent transponder node, an intelligent repeater node, an intelligent relay node, etc., however the present disclosure is not limited to this, it may further be other device.

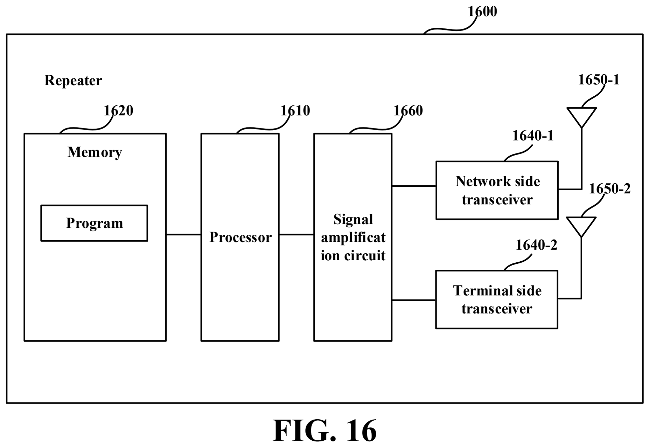

FIG. 16 is a composition schematic diagram of a repeater in the embodiments of the present disclosure. As shown in FIG. 16, the repeater 1600 may include a processor 1610 and a memory 1620; the memory 16620 stores data and programs, and is coupled to the processor 1610. It's worth noting that this figure is exemplary; other types of structures may also be used to supplement or replace this structure, so as to realize a telecommunication function or other functions.

For example, the processor 1610 may be configured to execute a program to implement the method described in the embodiments of the first aspect or the second aspect.

As shown in FIG. 16, the repeater 1600 may further comprise: a network side transceiver 1640-1 and a network side antenna 1650-1, a terminal side transceiver 1640-2 and a terminal side antenna 1650-2, and a signal amplification circuit 1660, etc.; the functions of said components are similar to relevant arts, which are not repeated here. It's worth noting that the repeater 1600 does not have to include all the components shown in FIG. 16. Moreover, the repeater 1600 may also include components not shown in FIG. 16, related arts may be referred to.

Embodiments of the present disclosure further provide a computer readable program, wherein when the program is executed in a repeater, the program enables a computer to execute the method as described in the embodiments of the first or second aspect, in the repeater.

Embodiments of the present disclosure further provide a storage medium in which a computer readable program is stored, wherein the computer readable program enables a computer to execute the method as described in the embodiments of the first or second aspect, in a repeater.

Embodiments of the present disclosure further provide a computer readable program, wherein when a network device executes the program, the program enables a computer to execute the method described in the embodiments of the third aspect, in the network device.

Embodiments of the present disclosure further provide a storage medium in which a computer readable program is stored, wherein the computer readable program enables a computer to execute the method as described in the embodiments of the third aspect, in a network device.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

Regarding the above implementations disclosed in this embodiment, the following supplements are further disclosed:
1. A communication method, wherein the method includes:
   a repeater receives a first MAC CE for indicating an uplink backhaul link beam; and
   transmission of the repeater on a backhaul link uses a spatial filter to which a TCI state or an SRI provided by the first MAC CE corresponds.
2. The method according to supplement 1, wherein the method further includes:
   in a case where the repeater does not perform transmission simultaneously on the backhaul link and a control link, the transmission of the repeater on the backhaul link uses the spatial filter to which the TCI state or the SRI provided by the first MAC CE corresponds.
3. The method according to supplement 1 or 2, wherein the method further includes:
   in a case where the repeater performs transmission simultaneously on the backhaul link and a control link, the spatial filter for the transmission on the backhaul link is the same as that for the control link.
4. The method according to supplement 1, wherein the SRI comprises: an SRS resource, and/or an SRS resource indicator, and/or an SRS resource ID, and/or an SRS resource set, and/or an SRS resource set indicator, and/or an SRS resource set ID, and/or a PUCCH resource, and/or a PUCCH resource indicator, and/or a PUCCH resource ID, and/or a PUCCH resource set, and/or a PUCCH resource set indicator, and/or a PUCCH resource set ID, and/or a PUCCH resource group, and/or a PUCCH resource group indicator, and/or a PUCCH resource group ID, and/or spatial relation information, and/or a spatial relation information indicator and/or a spatial relation information ID.
5. The method according to supplement 4, wherein,
   the spatial relation information indicates a first reference resource and/or a first reference reference signal (reference RS), and/or,
   the spatial relation information comprises: an SSB index, and/or an NZP CSI-RS resource index, and/or an SRS resource identifier.
5a. The method according to supplement 1, wherein the SRI is used to provide a first reference resource and/or a first reference reference signal (reference RS), the first reference resource and/or the first reference reference signal (reference RS) comprising: a PUCCH resource, and/or an SSB, and/or an NZP CSI-RS resource, and/or an SRS resource.
6. The method according to any one of the preceding supplements, wherein,
   an information field included in the first MAC CE is fixed or variable.
7. The method according to supplement 6, wherein,
   the first MAC CE comprises a first information field, or,
   in a case where the repeater is configured with a unified TCI state, the first MAC CE comprises a first information field; and in a case where the repeater is not configured with a unified TCI state, the first MAC CE comprises a first information field and a second information field.
8. The method according to any one of the preceding supplements, wherein,
   the first MAC CE has a fixed size or a variable size.
9. The method according to supplement 8, wherein,
   the first MAC CE has one octet, or,
   in a case where the repeater is configured with a unified TCI state, the first MAC CE has one octet; and in a case where the repeater is not configured with a unified TCI state, the first MAC CE has two octets;
   wherein one octet includes 8 bits.
10. The method according to any one of the preceding supplements, wherein,
   in a case where the repeater is configured with a unified TCI state type with a type being "joint" (i.e., *unifiedTCI-StateType* = joint) and/or is configured with a joint TCI state, the first MAC CE includes an ID of a joint TCI state.
11. The method according to supplement 10, wherein,
   the joint TCI state is a TCI state of an active DL BWP, or,
   the joint TCI state is a TCI state configured by first configuration information in the active DL BWP.
12. The method according to any one of the preceding supplements, wherein,
   in a case where the repeater is configured with a unified TCI state type with a type being "separate" (i.e., *unifiedTCI-StateType =* seperate) and/or is configured with an uplink TCI state (*ul-TCI-StateList*), the first MAC CE includes an ID of an UL TCI state.
13. The method according to supplement 12, wherein,
   the UL TCI state is a TCI state of an active UL BWP, or,
   the UL TCI state is a TCI state configured by second configuration information in the active UL BWP.
14. The method according to any one of the preceding supplements, wherein,
   in a case where the repeater does not support a unified TCI state and/or is not configured with a unified TCI state, the first MAC CE provides an SRI.
15. The method according to any one of the preceding supplements, wherein that the first MAC CE provides an SRI comprises that, the first MAC CE indicates an SRS resource and/or an SRS resource set.
16. The method according to supplement 15, wherein,
   a second reference resource and/or second reference reference signal to which the SRS resource corresponds is/are indicated by RRC signaling and/or MAC signaling.
17. The method according to supplement 15, wherein the SRS resource indicated by the first MAC CE is:
   periodic or semi-persistent or aperiodic; and/or,
   used for beam management or codebook or non-codebook or antenna switching or PDC; and/or,
   configured by third configuration information and/or fourth configuration information; and/or,
   in an active uplink BWP.
17a. The method according to supplement 15 or17, wherein the SRS resource indicated by the first MAC CE:
   has a specific resource type; and/or,
   has a specific purpose; and/or,
   has specific spatial relation information; and/or
   belongs to a specific SRS resource set; and/or,
   has an SRS resource identifier less than or not greater than a first value; and/or,
   belongs to former N or latter N SRS resources arranged in an ascending or descending order of indices; and/or,
   belongs to former N or latter N SRS resources arranged in an ascending or descending order of SRS resource identifiers.
18. The method according to any one of Supplements 15-17, wherein,
   the first MAC CE indicates the SRS resource from one or more SRS resources.
19. The method according to supplement 18, wherein,
   the one or more SRS resources are configured by the third configuration information and/or by the fourth configuration information.
20. The method according to any one of Supplements 18-19, wherein the one or more SRS resources:
   have a specific resource type; and/or,
   have a specific purpose; and/or,
   have specific spatial relation information; and/or
   belong to a specific SRS resource set; and/or,
   have an SRS resource identifier less than or not greater than a first value; and/or,
   belong to former N or latter N SRS resources arranged in an ascending or descending order of indices; and/or,
   belong to former N or latter N SRS resources arranged in an ascending or descending order of SRS resource identifiers.
21. The method according to supplement 20, wherein,
   the specific resource type comprises: periodic, or semi-persistent, or aperiodic;
   the specific purpose comprises: beam management or codebook or non-codebook or antenna switching or PDC;
   and the specific spatial relation information comprises: that a corresponding second reference resource and/or second reference reference signal is/are in an active downlink BWP or uplink BWP.
22. The method according to supplement 20, wherein,
   the specific SRS resource set is predefined or indicated.
22a. The method according to supplement 20 or 22, wherein,
   the specific SRS resource set is an SRS resource set indicated by the first MAC CE.
23. The method according to supplement 20 or 22, wherein the specific SRS resource set:
   has a specific resource type; and/or,
   has a specific purpose; and/or,
   has a specific SRS resource set identifier; and/or,
   has a specific index; and/or,
   is indicated by the first MAC CE.
24. The method according to supplement 23, wherein,
   the specific purpose comprises: beam management or codebook or non-codebook or antenna switching or PDC;
   the specific resource type comprises: periodic, or semi-persistent, or aperiodic;
   the specific SRS resource set identifier comprises: maximum or minimum SRS resource set identifier, or relatively large or small SRS resource set identifier, or SRS resource set identifier equal to a specific value;
   and the specific index comprises: a first or last one in an SRS resource set configured by fourth configuration information.
25. The method according to any one of supplements 15-24, wherein the SRS resource set indicated by the first MAC CE:
   is periodic, or semi-persistent, or aperiodic; and/or,
   is used for beam management or codebook or non-codebook or antenna switching or PDC; and/or,
   is configured by the fourth configuration information; and/or,
   is in an active uplink BWP.
25a. The method according to supplement 15 or 25, wherein the SRS resource set indicated by the first MAC CE:
   has a specific resource type; and/or,
   has a specific purpose; and/or,
   has a specific spatial relation configuration; and/or,
   only comprises one SRS resource; and/or,
   has an SRS resource set identifier less than or not greater than a second value; and/or,
   belongs to former N or latter N SRS resource sets arranged in an ascending or descending order of indices; and/or,
   belongs to former N or latter N SRS resource sets arranged in an ascending or descending order of SRS resource set identifiers.
26. The method according to supplement 25, wherein,
   the first MAC CE indicates the SRS resource set from one or more SRS resource sets.
27. The method according to supplement 26, wherein,
   the one or more SRS resources are configured by the fourth configuration information.
28. The method according to supplement 26, wherein the one or more SRS resource sets:
   have a specific resource type; and/or,
   have a specific purpose; and/or,
   have a specific spatial relation configuration; and/or,
   only comprise one SRS resource; and/or,
   have an SRS resource set identifier less than or not greater than a second value; and/or,
   belong to former N or latter N SRS resource sets arranged in an ascending or descending order of indices; and/or,
   belong to former N or latter N SRS resource sets arranged in an ascending or descending order of SRS resource set identifiers.
29. The method according to supplement 28, wherein,
   the specific purpose comprises: beam management or codebook or non-codebook or antenna switching or PDC;
   the specific resource type comprises: periodic, or semi-persistent, or aperiodic;
   and the specific spatial relation configuration comprises that spatial relation information and/or second reference resources and/or second reference reference signals of all SRS resources in an SRS resource set is/are identical.
30. The method according to any one of supplements 15-29, wherein,
   the same information field of the first MAC CE is used to indicate the SRS resource set and the SRS resource; or,
   different information fields of the first MAC CE are respectively used to indicate the SRS resource set and the SRS resource.
31. The method according to any one of supplements 15-30, wherein,
   the first MAC CE indicates the SRS resource by indicating an SRS resource identifier; or,
   the first MAC CE indicates the SRS resource based on a mapping relationship between a bit value and an SRS resource in the one or more SRS resources.
32. The method according to any one of supplements 15-31, wherein,
   the first MAC CE indicates the SRS resource set by indicating an SRS resource set identifier; or, the first MAC CE indicates the SRS resource set based on a mapping relationship between a bit value and the one or more SRS resource sets.
33. The method according to Supplement 14, wherein that the first MAC CE provides an SRI comprises that:
   the first MAC CE indicates a PUCCH resource and/or a PUCCH resource group and/or a PUCCH resource set.
34. The method according to supplement 33, wherein,
   a third reference resource and/or a third reference reference signal corresponding to the PUCCH resource are predefined and/or indicated.
35. The method according to supplement 33, wherein,
   the first MAC CE comprises: a PUCCH resource identifier or a PUCCH resource group identifier or a PUCCH resource set identifier.
36. The method according to Supplement 14, wherein that the first MAC CE provides an SRI comprises that:
   the first MAC CE indicates spatial relation information and/or a first reference resource and/or a first reference reference signal.
37. The method according to supplement 36, wherein,
   the first MAC CE indicates the spatial relation information by indicating a spatial relation information identifier and/or the first reference resource and/or the first reference reference signal.
38. A communication method, wherein the method includes:
   a repeater receives a first or second MAC CE for indicating an uplink backhaul link beam; and
   transmission of the repeater on a backhaul link uses a spatial filter to which a TCI state provided by the first MAC CE or an SRI provided by the second MAC CE corresponds.
38a. The method according to supplement 38, wherein identifiers and/or sizes of the first MAC CE and the second MAC CE are different.
39. The method according to supplement 38 or 38a, wherein,
   the first MAC CE is used to indicate an uplink backhaul link beam in a case where the repeater is configured with a unified TCI state.
40. The method according to any one of supplements 38-39, wherein,
   the second MAC CE is used to indicate an uplink backhaul link beam in a case where the repeater does not support a unified TCI state and/or is not configured with the unified TCI state.
41. The method according to supplement 40, wherein that the second MAC CE provides an SRI comprises that:
   the second MAC CE indicates an SRS resource and/or an SRS resource set.
42. The method according to supplement 41, wherein,
   a second reference resource and/or second reference reference signal to which the SRS resource corresponds is/are indicated by RRC signaling and/or MAC signaling.
43. The method according to supplement 41, wherein the SRS resource indicated by the second MAC CE:
   is periodic, or semi-persistent, or aperiodic; and/or,
   is used for beam management or codebook or non-codebook or antenna switching or PDC; and/or,
   is configured by third configuration information and/or fourth configuration information; and/or,
   is in an active uplink BWP.
43a. The method according to supplement 41 or 43, wherein the SRS resource indicated by the second MAC CE:
   has a specific resource type; and/or,
   has a specific purpose; and/or,
   has specific spatial relation information; and/or
   belongs to a specific SRS resource set; and/or,
   has an SRS resource identifier less than or not greater than a first value; and/or,
   belongs to former N or latter N SRS resources arranged in an ascending or descending order of indices; and/or,
   belongs to former N or latter N SRS resources arranged in an ascending or descending order of SRS resource identifiers.
44. The method according to supplement 43, wherein,
   the second MAC CE indicates the SRS resource from one or more SRS resources.
45. The method according to supplement 44, wherein,
   the one or more SRS resources are configured by the third configuration information and/or by the fourth configuration information.
46. The method according to supplement 44, wherein the one or more SRS resources:
   have a specific resource type; and/or,
   have a specific purpose; and/or,
   have specific spatial relation information; and/or,
   belong to a specific SRS resource set; and/or,
   have an SRS resource identifier less than or not greater than a first value; and/or,
   belong to former N or latter N SRS resources arranged in an ascending or descending order of indices; and/or,
   belong to former N or latter N SRS resources arranged in an ascending or descending order of SRS resource identifiers.
47. The method according to supplement 46, wherein,
   the specific resource type comprises: periodic, or semi-persistent, or aperiodic;
   the specific purpose comprises: beam management or codebook or non-codebook or antenna switching or PDC;
   and the specific spatial relation information comprises: that a corresponding second reference resource and/or second reference reference signal is/are in an active downlink BWP or uplink BWP.
48. The method according to supplement 46, wherein,
   the specific SRS resource set is predefined or indicated.
48a. The method according to supplement 46 or 48, wherein,
   the specific SRS resource set is an SRS resource set indicated by the second MAC CE.
49. The method according to supplement 46 or 48, wherein the specific SRS resource set:
   has a specific resource type; and/or,
   has a specific purpose; and/or,
   has a specific SRS resource set identifier; and/or,
   has a specific index; and/or,
   is indicated by the second MAC CE.
50. The method according to supplement 49, wherein,
   the specific purpose comprises: beam management or codebook or non-codebook or antenna switching or PDC;
   the specific resource type comprises: periodic, or semi-persistent, or aperiodic;
   the specific SRS resource set identifier comprises: maximum or minimum SRS resource set identifier, or relatively large or small SRS resource set identifier, or SRS resource set identifier equal to a specific value;
   and the specific index comprises: a first or last one in an SRS resource set configured by fourth configuration information.
51. The method according to supplement 41, wherein the SRS resource set indicated by the second MAC CE:
   is periodic, or semi-persistent, or aperiodic; and/or,
   is used for beam management or codebook or non-codebook or antenna switching or PDC; and/or,
   is configured by the fourth configuration information; and/or,
   is in an active uplink BWP.
51a. The method according to supplement 41 or 51, wherein the SRS resource set indicated by the second MAC CE:
   has a specific resource type; and/or,
   has a specific purpose; and/or, has a specific spatial relation configuration; and/or,
   only comprises one SRS resource; and/or,
   has an SRS resource set identifier less than or not greater than a second value; and/or,
   belongs to former N or latter N SRS resource sets arranged in an ascending or descending order of indices; and/or,
   belongs to former N or latter N SRS resource sets arranged in an ascending or descending order of SRS resource set identifiers.
52. The method according to supplement 51, wherein,
   the second MAC CE indicates the SRS resource set from one or more SRS resource sets.
53. The method according to supplement 52, wherein,
   the one or more SRS resources are configured by the fourth configuration information.
54. The method according to supplement 52, wherein the one or more SRS resource sets:
   have a specific resource type; and/or,
   have a specific purpose; and/or,
   have a specific spatial relation configuration; and/or,
   only comprise one SRS resource; and/or,
   have an SRS resource set identifier less than or not greater than a second value; and/or,
   belong to former N or latter N SRS resource sets arranged in an ascending or descending order of indices; and/or,
   belong to former N or latter N SRS resource sets arranged in an ascending or descending order of SRS resource set identifiers.
55. The method according to supplement 54, wherein,
   the specific purpose comprises: beam management or codebook or non-codebook or antenna switching or PDC;
   the specific resource type comprises: periodic, or semi-persistent, or aperiodic;
   and the specific spatial relation configuration comprises that spatial relation information and/or second reference resources and/or second reference reference signals of all SRS resources in an SRS resource set is/are identical.
56. The method according to supplement 41, wherein,
   the same information field of the second MAC CE is used to indicate the SRS resource set and the SRS resource; or,
   different information fields of the second MAC CE are respectively used to indicate the SRS resource set and the SRS resource.
57. The method according to supplement 41, wherein,
   the second MAC CE indicates the SRS resource by indicating an SRS resource identifier; or,
   the second MAC CE indicates the SRS resource based on a mapping relationship between a bit value and an SRS resource in the one or more SRS resources.
58. The method according to supplement 41, wherein,
   the second MAC CE indicates the SRS resource set by indicating an SRS resource set identifier; or, the second MAC CE indicates the SRS resource set based on a mapping relationship between a bit value and the one or more SRS resource sets.
59. The method according to supplement 40, wherein that the second MAC CE provides an SRI comprises that:
   the second MAC CE indicates a PUCCH resource and/or a PUCCH resource group and/or a PUCCH resource set.
60. The method according to supplement 59, wherein,
   a third reference resource and/or a third reference reference signal corresponding to the PUCCH resource are predefined and/or indicated.
61. The method according to supplement 59, wherein,
   the second MAC CE comprises: a PUCCH resource identifier or a PUCCH resource group identifier or a PUCCH resource set identifier.
62. The method according to supplement 40, wherein that the second MAC CE provides an SRI comprises that:
   the second MAC CE indicates spatial relation information and/or a first reference resource and/or a first reference reference signal.
63. The method according to supplement 62, wherein,
   the second MAC CE indicates the spatial relation information by indicating a spatial relation information identifier and/or the first reference resource and/or the first reference reference signal.
64. A repeater, comprising a memory and a processor, the memory storing a computer program, and the processor being configured to execute the method according to any one of supplements 1 to 63.
65. A communication system, comprising a network device, a repeater and a terminal equipment, the repeater being configured to perform the method according to any one of supplements 1 to 63.

## Claims

1. A repeater, comprising:
a mobile terminal configured to receive a first MAC CE for indicating an uplink backhaul link beam; and
a forwarding unit with transmission on a backhaul link using a spatial filter to which a TCI state or an SRI provided by the first MAC CE corresponds.

2. The repeater according to claim 1, wherein,
in a case where the repeater does not perform transmission simultaneously on the backhaul link and a control link, the transmission of the forwarding unit on the backhaul link uses the spatial filter to which the TCI state or the SRI provided by the first MAC CE corresponds.

3. The repeater according to claim 1, wherein,
the SRI is used to provide a first reference resource and/or a first reference reference signal (reference RS),
the first reference resource and/or the first reference reference signal (reference RS) comprising a PUCCH resource, and/or an SSB, and/or an NZP CSI-RS resource, and/or an SRS resource.

4. The repeater according to claim 1, wherein,
that the first MAC CE provides an SRI comprises that, the first MAC CE indicates an SRS resource and/or an SRS resource set.

5. The repeater according to claim 4, wherein,
a second reference resource and/or second reference reference signal to which the SRS resource corresponds is/are indicated by RRC signaling and/or MAC signaling.

6. The repeater according to claim 4, wherein the SRS resource indicated by the first MAC CE is:
periodic or semi-persistent or aperiodic; and/or,
used for beam management or codebook or non-codebook or antenna switching or PDC; and/or,
configured by third configuration information and/or fourth configuration information; and/or,
in an active uplink BWP.

7. The repeater according to claim 4, wherein the SRS resource indicated by the first MAC CE:
has a specific resource type; and/or,
has a specific purpose; and/or,
has specific spatial relation information; and/or,
belongs to a specific SRS resource set; and/or,
has an SRS resource identifier less than or not greater than a first value; and/or,
belongs to former N or latter N SRS resources arranged in an ascending or descending order of indices; and/or,
belongs to former N or latter N SRS resources arranged in an ascending or descending order of SRS resource identifiers.

8. The repeater according to claim 4, wherein,
the first MAC CE indicates the SRS resource from one or more SRS resources.

9. The repeater according to claim 8, wherein the one or more SRS resources:
have a specific resource type; and/or,
have a specific purpose; and/or,
have specific spatial relation information; and/or
belong to a specific SRS resource set; and/or,
have an SRS resource identifier less than or not greater than a first value; and/or,
belong to former N or latter N SRS resources arranged in an ascending or descending order of indices; and/or,
belong to former N or latter N SRS resources arranged in an ascending or descending order of SRS resource identifiers.

10. The repeater according to claim 9, wherein,
the specific resource type comprises: periodic, or semi-persistent, or aperiodic;
the specific purpose comprises: beam management or codebook or non-codebook or antenna switching or PDC;
and the specific spatial relation information comprises: that a corresponding second reference resource and/or second reference reference signal is/are in an active downlink BWP or uplink BWP.

11. The repeater according to claim 9, wherein,
the specific SRS resource set is predefined or indicated.

12. The repeater according to claim 9, wherein,
the specific SRS resource set is an SRS resource set indicated by the first MAC CE.

13. The repeater according to claim 9, wherein the specific SRS resource set:
has a specific resource type; and/or,
has a specific purpose; and/or,
has a specific SRS resource set identifier; and/or,
has a specific index; and/or,
is indicated by the first MAC CE.

14. The repeater according to claim 13, wherein,
the specific purpose comprises: beam management or codebook or non-codebook or antenna switching or PDC;
the specific resource type comprises: periodic, or semi-persistent, or aperiodic;
the specific SRS resource set identifier comprises: maximum or minimum SRS resource set identifier, or relatively large or small SRS resource set identifier, or SRS resource set identifier equal to a specific value;
and the specific index comprises: a first or last one in an SRS resource set configured by fourth configuration information.

15. The repeater according to claim 4, wherein the SRS resource set indicated by the first MAC CE:
is periodic, or semi-persistent, or aperiodic; and/or,
is used for beam management or codebook or non-codebook or antenna switching or PDC; and/or,
is configured by fourth configuration information; and/or,
is in an active uplink BWP.

16. The repeater according to claim 4, wherein the SRS resource set indicated by the first MAC CE:
has a specific resource type; and/or,
has a specific purpose; and/or, has a specific spatial relation configuration; and/or,
only comprises one SRS resource; and/or,
has an SRS resource set identifier less than or not greater than a second value; and/or,
belongs to former N or latter N SRS resource sets arranged in an ascending or descending order of indices; and/or,
belongs to former N or latter N SRS resource sets arranged in an ascending or descending order of SRS resource set identifiers.

17. The repeater according to claim 15, wherein,
the first MAC CE indicates the SRS resource set from one or more SRS resource sets.

18. The repeater according to claim 17, wherein the one or more SRS resource sets:
have a specific resource type; and/or,
have a specific purpose; and/or,
have a specific spatial relation configuration; and/or,
only comprise one SRS resource; and/or,
have an SRS resource set identifier less than or not greater than a second value; and/or,
belong to former N or latter N SRS resource sets arranged in an ascending or descending order of indices; and/or,
belong to former N or latter N SRS resource sets arranged in an ascending or descending order of SRS resource set identifiers.

19. The repeater according to claim 18, wherein,
the specific purpose comprises: beam management or codebook or non-codebook or antenna switching or PDC;
the specific resource type comprises: periodic, or semi-persistent, or aperiodic;
and the specific spatial relation configuration comprises that spatial relation information and/or second reference resources and/or second reference reference signals of all SRS resources in an SRS resource set is/are identical.

20. A network device, comprising:
a transmitting unit configured to transmit a first MAC CE for indicating an uplink backhaul link beam to a repeater, so that transmission of the repeater on a backhaul link uses a spatial filter to which a TCI state or an SRI provided by the first MAC CE corresponds; or, transmit a first MAC CE or a second MAC CE for indicating an uplink backhaul link beam to a repeater, so that transmission of the repeater on a backhaul link uses a spatial filter to which a TCI state provided by the first MAC CE or an SRI provided by the second MAC CE corresponds.
